# EUROPEAN PATENT APPLICATION

(11) **EP 4 575 961 A1**
(43) Date of publication of application: **25.06.2025**
(21) Application number: 23859481.6
(22) Date of filing: 01.09.2023
(51) Int. Cl.: G06Q 20/36, G06Q 40/02

(54) **TRANSACTION METHOD, AND HARDWARE WALLET OPENING METHOD, APPARATUS AND DEVICE**

(30) Priority: 01.09.2022 CN 202211065583; 01.09.2022 CN 202211065359; 01.09.2022 CN 202211065587
(71) Applicant: Digital Currency Institute, The People's Bank of China, Beijing 100071 (CN)
(72) Inventor: MU, Changchun, Beijing 100071 (CN); DI, Gang, Beijing 100071 (CN); LYU, Yuan, Beijing 100071 (CN); ZHAO, Xinyu, Beijing 100071 (CN); XU, Kefeng, Beijing 100071 (CN); ZHANG, Zhan, Beijing 100071 (CN); CUI, Peidong, Beijing 100071 (CN); QI, Tongfei, Beijing 100071 (CN); PENG, Meiling, Beijing 100071 (CN); WANG, Ting, Beijing 100071 (CN); FAN, Yaqi, Beijing 100071 (CN); HU, Qiang, Beijing 100071 (CN); PENG, Chenyi, Beijing 100071 (CN); ZHANG, Hongxue, Beijing 100071 (CN); CHEN, Song, Beijing 100071 (CN); ZHOU, Yubo, Beijing 100071 (CN)
(74) Representative: Winter, Brandl - Partnerschaft mbB
(86) International application number: PCT/CN2023/116424
(87) International publication number: WO 2024/046453

(57) **Abstract**

A transaction method is applied to a hardware wallet, and the hardware wallet stores association information of a target wallet account associated with the hardware wallet. The transaction method includes: receiving a transaction request from a transaction initiating device (201); and in response to the transaction request, sending the association information to the transaction initiating device such that the transaction initiating device performs a transaction with the target wallet account according to the association information (202). The transaction method relates to the technical field of payment transactions, and may reduce the transaction cost of a hardware wallet.

## Description

This application claims priority to Chinese Patent Application No. 202211065583.7 filed on September 01, 2022, claims priority to Chinese Patent Application No. 202211065359.8 filed on September 01, 2022, and claims priority to Chinese Patent Application No. 202211065587.5 filed on September 01, 2022, the disclosures of which are hereby incorporated by reference in their entirety.

### Technical Field

The present disclosure relates to the technical field of payment transactions, and in particular, to a transaction method, and a hardware wallet opening method, apparatus, and a device.

### Background

With the development of a digital currency technology, hardware wallet products have emerged.

In a process of circulation of digital currency, as a physical medium for storing the digital currency that is opened through a counter or an electronic channel, a hardware wallet may be used by a user in the forms of a mobile terminal, a card, a wearable device, etc. For example, when the user needs to pay consumption expenses to a Point Of Sales (POS, a point of sales information management system) terminal, the hardware wallet in the form of the mobile terminal is subjected to a transaction with the POS terminal through a transaction form of a label payment technology, so as to deduct money from hardware wallet balances, thereby completing payment.

### Summary

In a first aspect, some embodiments of the present disclosure provide a transaction method, which is applied to a hardware wallet. The hardware wallet stores association information of a target wallet account associated with the hardware wallet. The method includes: a transaction request from a transaction initiating device is received; and in response to the transaction request, the association information is sent to the transaction initiating device such that the transaction initiating device performs a transaction with the target wallet account according to the association information.

A second aspect provides a transaction method, which is applied to a transaction initiating device and includes: in a process of performing a transaction with a hardware wallet, association information of the hardware wallet is acquired, wherein the association information is association information of a target wallet account associated with the hardware wallet; and a transaction is performed with the target wallet account based on the association information.

A third aspect provides a transaction method, which is applied to a server and includes: a deduction request is received, wherein the deduction request is sent by a transaction initiating device in response to acquiring of a hardware wallet identifier corresponding to a hardware wallet, and the deduction request includes the hardware wallet identifier and a collection amount; a target wallet account associated with the hardware wallet identifier and a balance of the target wallet account are determined; and when the balance is greater than or equal to the collection amount, a digital currency in the target wallet account and a digital currency in a collection account are updated according to the collection amount.

A fourth aspect provides a hardware wallet opening method, which is applied to a server corresponding to a hardware wallet issuing institution and includes: application information corresponding to a target user sent by a terminal device is received, wherein the application information is information that requests opening of a target hardware wallet, and the application information includes at least one of the following: user information and target wallet account information; target data corresponding to the target hardware wallet is generated based on the application information, wherein the target hardware wallet is a subsidiary wallet of a target wallet account corresponding to the target user, the target hardware wallet shares a balance and a payment limit corresponding to the target wallet account with the target wallet account, and the target data includes at least one of the following: an identifier of the target hardware wallet, and corresponding association information between the target hardware wallet and the target wallet account; and the target data is sent to the terminal device or a hardware wallet platform device such that the terminal device or the hardware wallet platform device opens the target hardware wallet based on the target data.

A fifth aspect provides a hardware wallet opening method, which is applied to a terminal device and includes: based on a target wallet account, application information corresponding to a target user is sent to a server corresponding to a hardware wallet issuing institution, where the application information is information that requests opening of a target hardware wallet, and the application information includes at least one of the following: user information and target wallet account information; target data sent by the server is received; and the target hardware wallet is opened based on the target data, wherein the target hardware wallet is a subsidiary wallet of the target wallet account corresponding to the target user, the target hardware wallet shares a balance and a payment limit corresponding to the target wallet account with the target wallet account, and the target data includes at least one of the following: an identifier of the target hardware wallet, and corresponding association information between the target hardware wallet and the target wallet account.

A sixth aspect provides a hardware wallet opening method, which is applied to a hardware wallet platform device and includes: target data sent by a server is received, wherein the target data is data corresponding to a target hardware wallet generated by the server based on application information, and the target data includes at least one of the following: an identifier of the target hardware wallet, and corresponding association information between the target hardware wallet and a target wallet account; and the target data is written to a target device to obtain the target hardware wallet, where the target hardware wallet is a subsidiary wallet of the target wallet account corresponding to a target user, and the target hardware wallet shares a balance and a payment limit corresponding to the target wallet account with the target wallet account.

A seventh aspect provides a transaction apparatus, which is applied to a hardware wallet. The hardware wallet stores association information of a target wallet account associated with the hardware wallet. The apparatus includes a receiving unit and a sending unit. The receiving unit is configured to receive a transaction request from a transaction initiating device; and the sending unit is configured to, in response to the transaction request, send the association information to the transaction initiating device such that the transaction initiating device performs a transaction with the target wallet account according to the association information.

An eighth aspect provides a transaction apparatus, which is applied to a transaction initiating device and includes an acquisition unit and a processing unit. The acquisition unit is configured to, in a process of performing a transaction with a hardware wallet, acquire association information of the hardware wallet, wherein the association information is association information of a target wallet account associated with the hardware wallet; and the processing unit is configured to perform a transaction with the target wallet account based on the association information.

A ninth aspect provides a transaction apparatus, including: a receiving unit, configured to execute receiving of a deduction request, wherein the deduction request is sent by a transaction initiating device in response to acquiring of a hardware wallet identifier corresponding to a hardware wallet, and the deduction request includes the hardware wallet identifier and a collection amount; a determination unit, configured to execute determination of a target wallet account associated with the hardware wallet identifier and a balance of the target wallet account; and a digital currency updating unit is configured to execute, when the balance is greater than or equal to the collection amount, updating a digital currency in the target wallet account and a digital currency in a collection account according to the collection amount.

A tenth aspect provides a server corresponding to a hardware wallet issuing institution. The server includes a transmission unit and a processing unit. The transmission unit is configured to receive application information corresponding to a target user sent by a terminal device, wherein the application information is information that requests opening of a target hardware wallet, and the application information includes at least one of the following: user information and target wallet account information; the processing unit is configured to generate, based on the application information, target data corresponding to the target hardware wallet, wherein the target hardware wallet is a subsidiary wallet of a target wallet account corresponding to the target user, the target hardware wallet shares a balance and a payment limit corresponding to the target wallet account with the target wallet account, and the target data includes at least one of the following: an identifier of the target hardware wallet, and corresponding association information between the hardware wallet and the target wallet account; and the transmission unit is configured to send the target data to the terminal device or a hardware wallet platform device such that the terminal device or the hardware wallet platform device opens the target hardware wallet based on the target data.

An eleventh aspect provides a terminal device, including a transmission unit and a processing unit. The transmission unit is configured to, based on a target wallet account, send application information corresponding to a target user to a server corresponding to a hardware wallet issuing institution, wherein the application information is information that requests opening of a target hardware wallet, and the application information includes at least one of the following: user information and target wallet account information; the transmission unit is configured to receive target data sent by the server; and the processing unit is configured to open the target hardware wallet based on the target data, wherein the target hardware wallet is a subsidiary wallet of the target wallet account corresponding to the target user, the target hardware wallet shares a balance and a payment limit corresponding to the target wallet account with the target wallet account, and the target data includes at least one of the following: an identifier of the target hardware wallet, and corresponding association information between the target hardware wallet and the target wallet account.

A twelfth aspect provides a hardware wallet platform device, including a transmission unit and a processing unit. The transmission unit is configured to receive target data sent by a server, wherein a target data is data corresponding to the target hardware wallet generated by the server based on application information, and the target data includes at least one of the following: an identifier of the target hardware wallet, and corresponding association information between the target hardware wallet and the target wallet account; and the processing unit is configured to write the target data to a target device to obtain the target hardware wallet, wherein the target hardware wallet is a subsidiary wallet of the target wallet account corresponding to a target user, and the target hardware wallet shares a balance and a payment limit corresponding to the target wallet account with the target wallet account.

A thirteenth aspect provides a transaction system, including a hardware wallet and a transaction initiating device. The hardware wallet is configured to execute the transaction method in any one of the first aspects; and the transaction initiating device is configured to execute the transaction method in any one of the second aspects.

A fourteenth aspect provides a hardware wallet opening system, including a server corresponding to a hardware wallet issuing institution, a terminal device, and a hardware wallet platform device. The server corresponding to the hardware wallet issuing institution is configured to execute the hardware wallet opening method in any one of the fourth aspects; the hardware wallet platform device is configured to execute the hardware wallet opening method in any one of the fifth aspects; and the terminal device is configured to execute the hardware wallet opening method in the sixth aspect.

A fifteenth aspect provides an electronic device, including: a processor; and a memory configured to store an instruction that is executable by the processor. The processor is configured to execute the instruction to implement the method in any one of the first aspects, any one of the second aspects, any one of the third aspects, any one of the fourth aspects, any one of the fifth aspects, or the sixth aspect.

A sixteenth aspect provides a computer-readable storage medium, storing a computer execution instruction. When the computer execution instruction is executed by a processor of an electronic device, the electronic device is enabled to execute the method in any one of the first aspects, any one of the second aspects, any one of the third aspects, any one of the fourth aspects, any one of the fifth aspects, or the sixth aspect.

### Brief Description of the Drawings

Fig. 1 is an implementation architecture diagram of a transaction method according to one or more embodiments.
Fig. 2 is a flowchart of a transaction method according to one or more embodiments.
Fig. 3 is a flowchart of another transaction method according to one or more embodiments.
Fig. 4 is a flowchart of another transaction method according to one or more embodiments.
Fig. 5 is a flowchart of another transaction method according to one or more embodiments.
Fig. 6 is a flowchart of another transaction method according to one or more embodiments.
Fig. 7 is a flowchart of another transaction method according to one or more embodiments.
Fig. 8 is a flowchart of another transaction method according to one or more embodiments.
Fig. 9 is a flowchart of another transaction method according to one or more embodiments.
Fig. 10 is a flowchart of another transaction method according to one or more embodiments.
Fig. 11 is a flowchart of another transaction method according to one or more embodiments.
Fig. 12 is an implementation architecture diagram of another transaction method according to one or more embodiments.
Fig. 13 is a diagram of a payment application according to one or more embodiments.
Fig. 14 is a flowchart of a transaction method according to one or more embodiments.
Fig. 15 is a flowchart of a transaction method according to one or more embodiments.
Fig. 16 is a flowchart of another transaction method according to one or more embodiments.
Fig. 17 is a flowchart of another transaction method according to one or more embodiments.
Fig. 18 is a diagram of a transaction scenario according to one or more embodiments.
Fig. 19 is a diagram of a transaction process according to one or more embodiments.
Fig. 20 is a device relationship diagram of a transaction system according to one or more embodiments.
Fig. 21 is a flowchart of another transaction method according to one or more embodiments.
Fig. 22 is an implementation architecture diagram of another transaction method according to one or more embodiments.
Fig. 23 is a flowchart of a hardware wallet opening method according to one or more embodiments.
Fig. 24 is a flowchart of another hardware wallet opening method according to one or more embodiments.
Fig. 25 is a flowchart of another hardware wallet opening method according to one or more embodiments.
Fig. 26 is a flowchart of another hardware wallet opening method according to one or more embodiments.
Fig. 27 is a flowchart of another hardware wallet opening method according to one or more embodiments.
Fig. 28 is a flowchart of another hardware wallet opening method according to one or more embodiments.
Fig. 29 is a flowchart of another hardware wallet opening method according to one or more embodiments.
Fig. 30 is a flowchart of another hardware wallet opening method according to one or more embodiments.
Fig. 31 is a flowchart of another hardware wallet opening method according to one or more embodiments.
Fig. 32 is a flowchart of another hardware wallet opening method according to one or more embodiments.
Fig. 33 is a flowchart of another hardware wallet opening method according to one or more embodiments.
Fig. 34 is a block diagram of a transaction apparatus according to one or more embodiments.
Fig. 35 is a block diagram of another transaction apparatus according to one or more embodiments.
Fig. 36 is a block diagram of another transaction apparatus according to one or more embodiments.
Fig. 37 is a block diagram of a hardware wallet opening apparatus according to one or more embodiments.
Fig. 38 is a block diagram of another hardware wallet opening apparatus according to one or more embodiments.
Fig. 39 is a block diagram of another hardware wallet opening apparatus according to one or more embodiments.
Fig. 40 is a block diagram of an electronic device according to one or more embodiments.

### Detailed Description of the Embodiments

Features and exemplary embodiments of various aspects of the present disclosure will be described in detail below. In order to make the technical problems faced, technical solutions used and advantages of the present disclosure clearer and more understandable, the present disclosure is further described in detail with reference to the drawings and specific embodiments. It should be understood that the specific embodiments described herein are configured only to explain the present disclosure and are not configured to limit the present disclosure. For those skilled in the art, the present disclosure may be implemented without some of these specific details. The following description of embodiments is intended only to provide a better understanding of the present disclosure by illustrating examples of the present disclosure.

It is also to be noted that, in the present application, relational terms such as first and second are used merely to distinguish one entity or operation from another entity or operation herein, and do not necessarily require or imply the existence of any such actual relationship or order between these entities or operations; and the terms cannot be construed as indicating or implying relative importance or implicitly specifying the number of technical features indicated. Furthermore, features delimited with "first", "second" may expressly or implicitly include one or more of that feature. In the description of this embodiment, unless otherwise stated, the meaning of "a plurality of" is two or more. Furthermore, terms "comprise", "include" or any other variants are intended to encompass non-exclusive inclusion, such that a process, a method, an article or a device including a series of elements not only include those elements, but also includes other elements not listed explicitly or includes intrinsic elements for the process, the method, the article, or the device. Without any further limitation, an element defined by the phrase "comprising" does not exclude existence of other same elements in the process, the method, the article, or the device that includes the elements.

Furthermore, the term "one (a or an)" as used in the specification and/or claims will be interpreted as "at least one".

With the development of a digital currency technology, hardware wallet products have emerged. Some existing hardware wallet products are subjected to transactions based on digital currency stored by their own during a transaction process, and a large number of security algorithms and transaction algorithms are used in the transaction process, resulting in high transaction cost.

Furthermore, a hardware wallet also has the problem of a storage capacity of the digital currency. It is also more cumbersome for a user to cash in and out of digital currency to and from the hardware wallet through the user's personal account.

In view of the above problem, some embodiments provide a transaction method, which may be applied to a hardware wallet. The hardware wallet stores association information of a target wallet account associated with the hardware wallet. In this way, after a transaction request from a transaction initiating device is received, the hardware wallet may send the association information to the transaction initiating device in response to the transaction request, such that the transaction initiating device performs a transaction with the target wallet account according to the association information.

From the above, it may be learned that the hardware wallet provided in some embodiments of the present disclosure may realize a transaction with the transaction initiating device only through the stored association information. Since the digital currency is not required to be stored in the hardware wallet, a large number of security algorithms and transaction algorithms are also not required to be set in the hardware wallet provided in some embodiments of the present disclosure, thereby reducing the transaction cost of the hardware wallet.

Furthermore, since the digital currency is not required to be stored in the hardware wallet, the hardware wallet provided in some embodiments of the present disclosure also has no problem of a storage capacity of the digital currency. The user does not need to cash in and out of the digital currency to and from the hardware wallet through the user's personal account, which is convenient for the user.

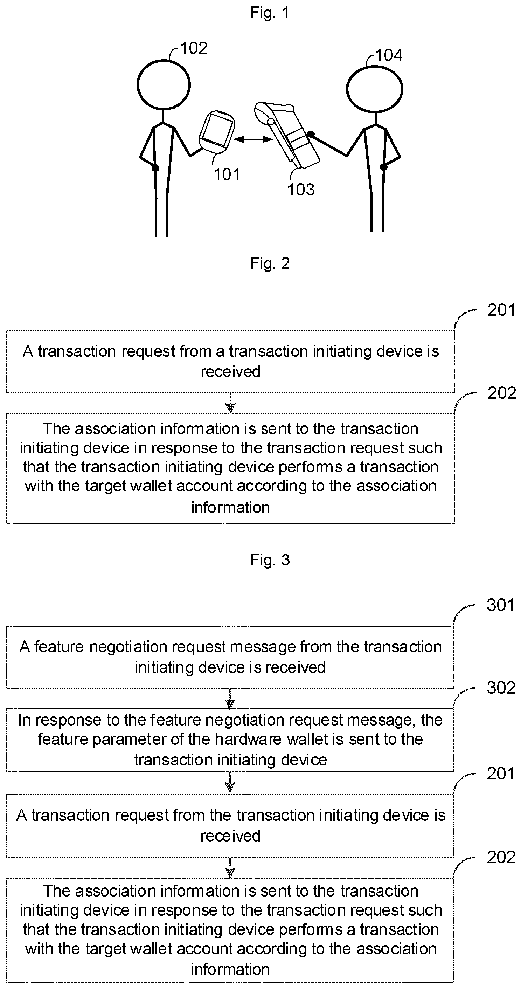

Fig. 1 is an implementation architecture diagram of some embodiments of the present disclosure. The user 102 with the hardware wallet 101 may perform a payment transaction with a merchant 104 with the transaction initiating device 103.

In a possible implementation, when the hardware wallet 101 is subjected to the payment transaction with the transaction initiating device 103, there may be a transaction between the digital currency and a physical item, or there may be a transaction between the digital currency and a virtual item, or there may also be a transaction of other types, and the present disclosure is not limited thereto.

When the transaction between the hardware wallet 101 and the transaction initiating device 103 is the transaction between the digital currency and the physical item, the hardware wallet 101 may send the stored association information to the transaction initiating device 103. The association information is association information (which may also be referred to an association identifier, an association code, or association code information) of the target wallet account associated with the hardware wallet.

After receiving the association information, the transaction initiating device 103 may send the transaction request to an account platform of the target wallet account. The account platform of the target wallet account may send the digital currency, or an identifier of the digital currency, or a user identifier and the like for indicating payment information of the digital currency to the transaction initiating device 103 in response to the transaction request.

After receiving the payment information and confirming that the payment information is correct, the transaction initiating device 103 may trade the physical item to the hardware wallet 101 (or the user corresponding to the hardware wallet 101), so as to complete the transaction.

In some embodiments, a physical form of the hardware wallet 101 may be a mobile terminal or a card, or may also be in various different forms such as a wearable device, for example, a visual card wallet, a watch, a wristband, etc.

In a possible implementation, a client may be installed on the hardware wallet 101. The client may also be an Application (APP). In a scenario that needs to set a transaction parameter of the hardware wallet, the user 102 may execute a parameter configuration operation in the client on the hardware wallet 101 or the APP.

The transaction initiating device 103 may be a device such as a POS acceptance terminal, a vending machine, a ticket vending machine, etc. for initiating a transaction.

In a possible implementation, a client may also be installed on the transaction initiating device 103. The client may be a client used for executing the initiation of the transaction. The client may be an APP. In a scenario that needs to initiate a transaction, the merchant 104 may execute a transaction initiating operation in the client on the transaction initiating device 103 or the APP.

For ease of understanding, the transaction method provided in some embodiments of the present disclosure is introduced below with reference to the drawings.

Fig. 2 is a flowchart of a transaction method according to one or more embodiments. The transaction method is applied to the hardware wallet 101 in Fig. 1. The hardware wallet stores association information of a target wallet account associated with the hardware wallet.

As shown in Fig. 2, the transaction method includes S201 to S202 below.

At S201, the hardware wallet receives a transaction request from a transaction initiating device.

In some embodiments, when the merchant initiates a transaction, the transaction initiating operation may be executed on the transaction initiating device. In this case, the transaction initiating device may send the transaction request to the hardware wallet in response to the transaction initiating operation executed by the user initiating the transaction. The transaction request may include information such as a transaction amount, a transaction time, etc.

In a possible implementation, the method that the hardware wallet receives the transaction request from the transaction initiating device includes: the hardware wallet receives the transaction request sent by the transaction initiating device through a preset communication mode.

The preset communication mode includes at least one of a near-field wireless communication mode, a Bluetooth communication mode, and an UWB communication mode.

The near-field wireless communication mode is a wireless communication mode, such that the wireless communication mode may also be referred to as a transaction communication mode of a label payment technology.

In some embodiments, the preset communication mode may further include, but is not limited to, an infrared transaction communication mode, a zigbee transaction communication mode, and a wireless fidelity transaction communication mode.

In practical application, the hardware wallet may also receive the transaction request sent by the transaction initiating device through a wired communication mode.

In one example, the transaction initiating device is preset as a POS terminal. An application scenario of the transaction method is preset as an application scenario that the merchant performs a receiving transaction with the user through the POS terminal.

When the merchant performs the receiving transaction, a triggering operation (i.e., the transaction initiating operation) may be performed on a transaction initiating control (e.g., a receiving control) on a transaction initiating page (e.g., a receiving page) of the POS terminal, and receiving information (e.g., a collection amount, a receiving mode, etc.) corresponding to the transaction is inputted. Then, the POS terminal may send the transaction request to the hardware wallet based on the near-field wireless communication mode in response to the triggering operation executed by the merchant. Correspondingly, the hardware wallet receives the transaction request from the transaction initiating device.

In a possible implementation, a transaction scenario of the hardware wallet and the transaction initiating device may be an offline transaction scenario (e.g., a small amount retail scenario, etc.), or may be an online cashier desk transaction scenario, or may also be other scenarios, and the present disclosure is not limited thereto.

In some embodiments, when the transaction scenario of the hardware wallet and the transaction initiating device is the online cashier desk transaction scenario, the hardware wallet may be a mobile phone client. The transaction initiating device may be an online cashier desk.

A Near Field Communication (NFC) read-write module of the mobile phone client may establish a connection with the online cashier desk through an NFC technology, and acquire a payment voucher (i.e., the association information) to realize online payment.

A hardware wallet in an amount mode of a mobile phone PAY type may also establish a connection with the online cashier desk through a channel inside a mobile phone, and acquire the payment voucher (i.e., the association information) to realize online payment.

At S202, the hardware wallet sends the association information to the transaction initiating device in response to the transaction request such that the transaction initiating device performs a transaction with the target wallet account according to the association information.

In some embodiments, the hardware wallet stores the association information of the target wallet account associated with the hardware wallet. After receiving the transaction request, the hardware wallet may send the association information to the transaction initiating device in response to the transaction request, such that the transaction initiating device performs the transaction with the target wallet account according to the association information.

In a possible implementation, a security chip is installed in the hardware wallet, and the association information may be stored in the security chip.

In a possible implementation, the hardware wallet is also referred to as a subsidiary wallet, and the target wallet account is also referred to as a parent wallet. The subsidiary wallet may reuse funds of the parent wallet without separate cashing in or out, which is convenient for the user.

In a possible implementation, wallet levels of the subsidiary wallet and parent wallet may be the same, or may be different.

The wallet level may include a class I real name wallet, a class II real name wallet, a class III real name wallet, and a class IV anonymous wallet. The user may determine anonymous or real-name use of the hardware wallet through configuration information, such that the privacy rights of the user are fully maintained.

In a possible implementation, the hardware wallet stores a secret key of the hardware wallet. The method that the hardware wallet sends the association information to the transaction initiating device includes the following operation.

The hardware wallet encrypts the association information based on the secret key, and sends the encrypted association information to the transaction initiating device.

In some embodiments, the hardware wallet may use a state secret algorithm, and the secret key is stored in a hardware carrier according to the principle of "one card, one password". The hardware wallet may use the secret key to encrypt the association information stored in the hardware wallet and transaction amount information, and send same to the account platform through the transaction initiating device, so as to perform a payment transaction, thereby improving the reliability of a transaction based on the hardware wallet.

Some embodiments of the present disclosure provide a transaction method, which may be applied to a hardware wallet. The hardware wallet stores association information of a target wallet account associated with the hardware wallet. In this way, after a transaction request from a transaction initiating device is received, the hardware wallet may send the association information to the transaction initiating device in response to the transaction request, such that the transaction initiating device performs a transaction with the target wallet account according to the association information.

From the above, it may be learned that the hardware wallet provided in some embodiments of the present disclosure may realize a transaction with the transaction initiating device only through the stored association information. Since the digital currency is not required to be stored in the hardware wallet, a large number of security algorithms and transaction algorithms are also not required to be set in the hardware wallet provided in some embodiments of the present disclosure, thereby reducing the transaction cost of the hardware wallet.

Furthermore, since the digital currency is not required to be stored in the hardware wallet, the hardware wallet provided in some embodiments of the present disclosure also has no problem of a storage capacity of the digital currency. The user does not need to cash in and out of the digital currency to and from the hardware wallet through his/her personal account, which is convenient for the user.

In a possible implementation, since the digital currency is not required to be stored in the hardware wallet, the hardware wallet may also be referred to as a hardware wallet in an account mode.

In some embodiments, the hardware wallet in the account mode is the hardware wallet in which an operating agency records the value of the e-CNY in a form of an account, establishes an association relationship between an owner identity and the value of the e-CNY in the account, stores an e-CNY voucher in a form of a security chip, with a unique hardware wallet number, and stores a coin string in an issuing and operator background system.

The hardware wallet in the account mode may be issued by using the security chip as a carrier after a personal wallet is opened for the user, or may also push the opened personal wallet to the security chip in the form of a voucher through an e-CNY APP.

Furthermore, the hardware wallet in the account mode is mainly applied to a scenario of a digital currency two-tier operating system. The digital currency-based two-tier operating system is operated with the participation of a designated operating agency, is based on a generalized account system, supports a loose coupling function of a bank account, is equivalent to physical currency, has value characteristics and legal compensation, provides supplements and backups for an existing electronic payment system, and supports fairness and efficiency in the field of retail payment.

Compared to a hardware product that stores a coin string on a front end, the hardware wallet in the account mode has a low requirement for hardware devices on both sides of collection and payment, and does not require support for high-speed algorithm processing capabilities and high-capacity storage spaces, such that more convenient promotion and expansion is realized.

Compared to a hardware wallet in a quasi account mode (i.e., the hardware wallet has an independent account in the background), the hardware wallet in the account mode may reuse funds of a parent wallet without separate cashing in or out, which is convenient for the user.

The hardware wallet in the account mode may also realize programmability by loading a smart contract that does not affect a digital currency function, such that the digital currency, while ensuring compliance, may be subjected to an automatic payment transaction according to conditions and rules agreed upon by two parties, thereby promoting innovation of service modes.

In a possible implementation, before the hardware wallet initiates a transaction with the transaction initiating device, feature negotiation may be performed in advance to determine whether a feature parameter of the hardware wallet is consistent with that of the transaction initiating device, so as to reduce the probability of failed transactions caused by different feature parameters of the hardware wallet and transaction initiating device, thereby improving the transaction reliability of the hardware wallet and transaction initiating device. In this case, with reference to Fig. 2, as shown in Fig. 3, before the hardware wallet receives the transaction request from the transaction initiating device, the transaction method provided in some embodiments of the present disclosure further includes S301 to S302.

At S301, the hardware wallet receives a feature negotiation request message from the transaction initiating device.

The feature negotiation request message is configured to request to negotiate a feature parameter of the hardware wallet with transaction initiating device. The feature parameter includes one or more of the following: version information of a digital currency string expression, application version information, a transaction mode, a device type, and a networking parameter.

In some embodiments, the digital currency string expression refers to an expression form of the digital currency stored in the hardware wallet. The version information of the digital currency string expression may be original version information of the digital currency string expression, or may also be version information after the digital currency string expression is upgraded, and the present disclosure is not limited thereto.

The application version information may include information referring to a version number, a version certificate, a version series, etc. of an application version of the hardware wallet, and the present disclosure is not limited thereto.

The transaction mode may include a transaction mode such as a single offline transaction mode, a double online transaction mode, and the like, and the present disclosure is not limited thereto.

The single offline transaction mode means that the transaction initiating device needs to interact with a transaction platform or an account platform, and the hardware wallet does not need to interact with the transaction platform or the account platform, such that the hardware wallet may be in an offline mode, and the transaction initiating device is required to be in an online mode.

The double online transaction mode means that the transaction initiating device needs to interact with the transaction platform or the account platform, and the hardware wallet does not need to interact with the transaction platform or the account platform, such that the hardware wallet may be in the online mode, and the transaction initiating device may also be in the online mode.

The device type may include a device type of the transaction initiating device, such as a POS machine, a vending machine, a ticket vending machine, etc., and the present disclosure is not limited thereto.

The device type may further include a device type of the hardware wallet, such as a card, a terminal, a wearable device, etc., and the present disclosure is not limited thereto.

The networking parameter may include a network parameter of the transaction initiating device, such as an Internet Protocol (IP) Address and the like, and the present disclosure is not limited thereto.

At S302, in response to the feature negotiation request message, the feature parameter of the hardware wallet is sent to the transaction initiating device.

In some embodiments, after receiving the feature negotiation request message from the transaction initiating device, the hardware wallet may send the feature parameter of the hardware wallet to the transaction initiating device in response to the feature negotiation request message, such that the transaction initiating device determines whether the feature parameter of the hardware wallet is consistent with the feature parameter of the transaction initiating device, so as to determine whether the transaction between the transaction initiating device and the hardware wallet may continue to be performed.

From the above, it may be learned that when the hardware wallet establishes a connection relationship with the transaction initiating device, a feature negotiation result may be determined in advance. The hardware wallet may realize selection of a fast transaction mode through a feature negotiation mechanism, such that a transaction time is greatly shortened, and operational burdens of cashiers and consumers are reduced.

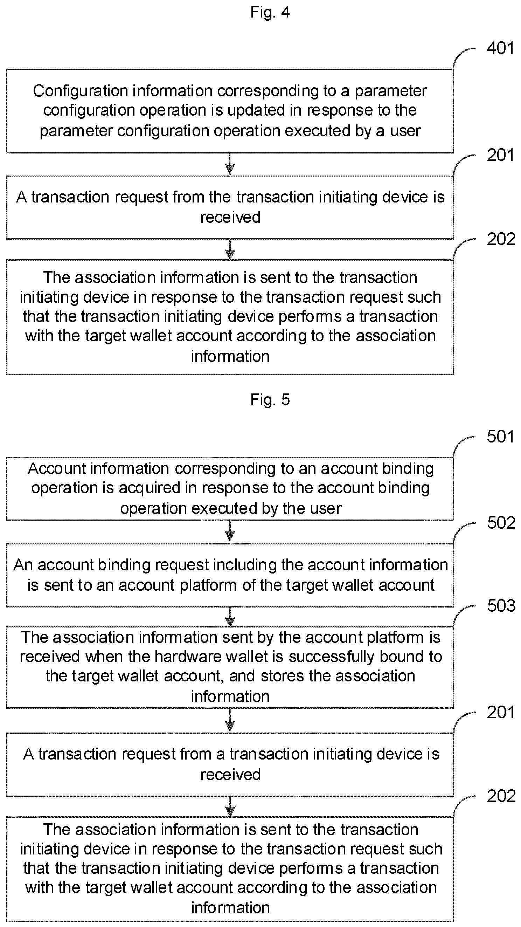

In a possible implementation, the hardware wallet may also set configuration information independently. In this case, with reference to Fig. 2, as shown in Fig. 4, before S201, the transaction method provided in some embodiments of the present disclosure further includes S401.

At S401, the hardware wallet updates configuration information corresponding to a parameter configuration operation in response to the parameter configuration operation executed by a user.

In a possible implementation, the parameter configuration operation may include an operation for inputting the configuration information and an operation for submitting the configuration information, and the present disclosure is not limited thereto.

The configuration information is configured to configure a transaction parameter of the hardware wallet. The transaction parameter includes one or more of the following: a transaction limit, a transaction password, a password verification payment limit, and a password-free payment limit.

The transaction limit refers to a maximum transaction limit of the hardware wallet within a certain time, for example, payment transactions that are up to 10,000 yuan can only be performed per day.

The transaction password refers to a payment transaction password of the hardware wallet, which is configured to improve the reliability of a transaction in a payment process.

The password verification payment limit refers to a maximum transaction limit that the transaction password needs to be inputted within a certain time by the hardware wallet, for example, payment transactions that are up to 10,000 yuan and require to input the transaction password can only be performed per day.

The password-free payment limit refers to a maximum transaction limit that the transaction password does not need to be inputted by the hardware wallet within a certain time, for example, payment transactions that are up to 1,000 yuan and do not require to input the transaction password can only be performed per day.

In a possible implementation, when there is an APP installed in the hardware wallet and the hardware wallet includes an interactive control (e.g., a touch screen, a physical control button, etc.), the user may execute the parameter configuration operation in the APP installed on the hardware wallet.

In another possible implementation, when there is no APP installed in the hardware wallet, the user may connect the hardware wallet onto an electronic device (e.g., a mobile phone, a computer, etc.) that may be operated. Then, the user may execute the parameter configuration operation on the electronic device.

In a possible implementation, the hardware wallet may also directly reuse the parent wallet to which it belongs and a bank card bound under the parent wallet, and the parent wallet is responsible for limit management.

In a possible implementation, before achieving a transaction, the hardware wallet needs to be bound to the target wallet account. In this case, with reference to Fig. 2, as shown in Fig. 5, before S201, the transaction method provided in some embodiments of the present disclosure further includes S501 to S503.

At S501, the hardware wallet acquires account information corresponding to an account binding operation in response to the account binding operation executed by the user.

The account information belongs to the target wallet account.

In a possible implementation, the account binding operation may include an operation for inputting the account information and an operation for submitting the account information, and the present disclosure is not limited thereto.

In a possible implementation, the account information may include an account card number of the target wallet account, an account password of the target wallet account, etc., and the present disclosure is not limited thereto.

In a possible implementation, when there is an APP installed in the hardware wallet and the hardware wallet includes an interactive control (e.g., a touch screen, a physical control button, etc.), the user may execute the account binding operation in the APP installed on the hardware wallet.

In another possible implementation, when there is no APP installed in the hardware wallet, the user may connect the hardware wallet onto an electronic device (e.g., a mobile phone, a computer, etc.) that may be operated. Then, the user may execute the account binding operation on the electronic device.

At S502, the hardware wallet sends an account binding request including the account information to an account platform of the target wallet account.

The account binding request is configured to request the binding of an association relationship between the hardware wallet and the target wallet account.

In a possible implementation, the account platform may be a service platform corresponding to a bank account institution corresponding to the target wallet account.

In a possible implementation, when there is an APP installed in the hardware wallet, the hardware wallet may send the account binding request including the account information to the account platform of the target wallet account when the hardware wallet may communicate with the account platform (i.e., the hardware wallet is in an online mode).

When sending the account binding request including the account information to the account platform of the target wallet account, the hardware wallet may send the account binding request including the account information to the account platform of the target wallet account through a wireless communication network, or may also send the account binding request including the account information to the account platform of the target wallet account through other communication modes, and the present disclosure is not limited thereto.

In another possible implementation, when there is no APP installed in the hardware wallet, the user may connect the hardware wallet onto an electronic device (e.g., a mobile phone, a computer, etc.) that may be operated. Then, the hardware wallet may send the account binding request including the account information to the account platform of the target wallet account through the electronic device.

At S503, the hardware wallet receives the association information sent by the account platform when the hardware wallet is successfully bound to the target wallet account, and stores the association information.

In some embodiments, after the hardware wallet sends the account binding request including the account information to the account platform of the target wallet account, the account platform may perform account binding based on the account binding request sent by the hardware wallet.

When determining that account binding is successful, the account platform may generate the association information, and send a binding success message to the hardware wallet. The binding success message may carry the association information, or may also not carry the association information.

When the binding success message does not carry the association information, the account platform may separately send the association information to the hardware wallet after the hardware wallet is successfully bound to the target wallet account.

In a possible implementation, the association information generated by the account platform according to the account information may be the account card number of the target wallet account, may be a mobile phone number of the user corresponding to the target wallet account, or may also be a unique identifier of another target wallet account, and the present disclosure is not limited thereto.

In a possible implementation, when storing the association information, the hardware wallet may store the association information in the security chip of the hardware wallet, and encrypts the association information through a unique secret key of the hardware wallet, such that the reliability of a transaction performed by the hardware wallet is improved.

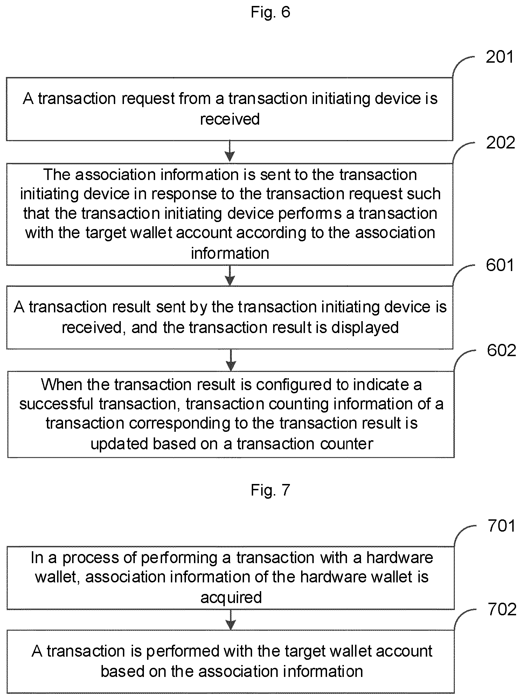

In a possible implementation, for ease of rapid understanding of a transaction result by the user, the hardware wallet may display the transaction result while having a visual screen. In this case, with reference to Fig. 2, as shown in Fig. 6, after S202, the transaction method provided in some embodiments of the present disclosure further includes S601 to S602.

At S601, the hardware wallet receives the transaction result sent by the transaction initiating device, and displays the transaction result.

In a possible implementation, when sending the transaction result to the hardware wallet, the transaction initiating device may send the transaction result to the hardware wallet through the preset communication mode. Correspondingly, the hardware wallet may receive, based on the preset communication mode, the transaction result sent by the transaction initiating device.

The preset communication mode includes the near-field wireless communication mode.

In practical application, the hardware wallet may also receive the transaction result sent by the transaction initiating device through the wired communication mode.

In a possible implementation, when a display screen is disposed on a physical device of the hardware wallet, the hardware wallet may display the transaction result through the display screen.

In another possible implementation, when the display screen is not disposed on the physical device of the hardware wallet, the hardware wallet may display the transaction result through a terminal (e.g., a mobile phone transaction APP, etc.) connected to the hardware wallet.

In a possible implementation, after the hardware wallet receives the transaction result sent by the transaction initiating device, the transaction method provided in some embodiments of the present disclosure further includes the following step.

At S602, when the transaction result is configured to indicate a successful transaction, the hardware wallet updates transaction counting information of a transaction corresponding to the transaction result based on a transaction counter.

In some embodiments, the hardware wallet may be provided with the transaction counter. The transaction counter may update the transaction counting information of the hardware wallet after the hardware wallet is subjected to a transaction. In this way, the hardware wallet in some embodiments of the present disclosure may use the transaction counter during the transaction to accumulate increasing mechanisms, that is, the transaction counter of each transaction is unique, and is configured to provide determination criteria for multi-terminal consistency during the transaction.

In some embodiments, the hardware wallet has had a total of 10 successful transactions before the current transaction. After the current transaction is successful, the hardware wallet may update the transaction counting information to 11 times based on the transaction counter.

Fig. 7 is a flowchart of another transaction method according to some embodiments. The transaction method is applied to the transaction initiating device 103 in Fig. 1.

As shown in Fig. 7, the transaction method includes S701 to S702 below.

At S701, in a process of performing a transaction with a hardware wallet, the transaction initiating device acquires association information of the hardware wallet.

The association information is association information of a target wallet account associated with the hardware wallet.

In some embodiments, when a merchant initiates a transaction, a transaction initiating operation may be executed on the transaction initiating device. In this case, the transaction initiating device may establish a connection relationship to the hardware wallet in response to the transaction initiating operation executed by a user initiating the transaction. Since there is no digital currency stored in the hardware wallet, in the process of performing the transaction with the hardware wallet, the transaction initiating device may acquire the association information of the hardware wallet.

In a possible implementation, the method that the transaction initiating device acquires the association information of the hardware wallet may include: the transaction initiating device receives the association information sent by the hardware wallet based on a preset communication mode.

The preset communication mode includes at least one of a near-field wireless communication mode, a Bluetooth communication mode, or an UWB communication mode.

In a possible implementation, the method that the transaction initiating device acquires the association information of the hardware wallet may include: the transaction initiating device receives a unique identifier of the hardware wallet sent by the hardware wallet based on the preset communication mode.

In some embodiments, the transaction initiating device may, based on the unique identifier of the hardware wallet, acquire the association information of the hardware wallet from a storage device (e.g., an account platform, etc.) storing the unique identifier of the hardware wallet and management information.

At S702, the transaction initiating device performs a transaction with the target wallet account based on the association information.

In some embodiments, after acquiring the association information of the hardware wallet, the transaction initiating device may determine an account platform of the target wallet account corresponding to the association information of the hardware wallet, and send a transaction initiating request to the account platform. Then, the account platform may complete the transaction with the transaction initiating device after determining that the transaction initiating request is correct.

In some embodiments, the hardware wallet is preset as a digital currency wallet card, and the transaction initiating device is preset as a POS terminal. In a scenario where the digital currency wallet card touches the POS terminal for consumption, the digital currency wallet card may realize small amount password-free payment based on an NFC technology.

In some embodiments, during consumption through touching, the POS terminal may send a payment request to the account platform after reading association information in a hardware carrier of the digital currency wallet card. The account platform may return a result to the POS terminal in the same way after completing deduction of a parent wallet (i.e., the target wallet account) corresponding to the association information.

The POS terminal may display a transaction result, or may also send the transaction result to the digital currency wallet card.

In a possible implementation, the method that the transaction initiating device performs the transaction with the target wallet account based on the association information includes: the transaction initiating device sends transaction request information to an operator background system corresponding to the target wallet account such that the operator background system corresponding to the target wallet account updates digital currency in the target wallet account.

In some embodiments, after acquiring the association information of the hardware wallet, the transaction initiating device may send the transaction request information to the operator background system corresponding to the target wallet account such that the operator background system corresponding to the target wallet account updates the digital currency in the target wallet account.

That the operator background system corresponding to the target wallet account updates the digital currency in the target wallet account includes: a coin string in the target wallet account is deducted, or the coin string in the target wallet account is added.

In some embodiments, in a scenario where the transaction initiating device is a collection device and the hardware wallet is a payment device, the operator background system corresponding to the target wallet account may deduct the coin string in the target wallet account, and the amount deducted is an amount that the hardware wallet is subjected to the transaction with the transaction initiating device.

Correspondingly, in a scenario where the transaction initiating device is the payment device and the hardware wallet is the collection device, the operator background system corresponding to the target wallet account may add the coin string in the target wallet account, and the amount added is an amount that the hardware wallet is subjected to the transaction with the transaction initiating device.

In a possible implementation, the method that the transaction initiating device performs the transaction with the target wallet account based on the association information includes: the transaction initiating device sends the transaction request information to the operator background system corresponding to the target wallet account such that the operator background system corresponding to the target wallet account updates the digital currency in the target wallet account, and an operator background system corresponding to the transaction initiating device updates digital currency in an account corresponding to the transaction initiating device.

In some embodiments, after acquiring the association information of the hardware wallet, the transaction initiating device may send the transaction request information to the operator background system corresponding to the target wallet account such that the operator background system corresponding to the target wallet account updates the digital currency in the target wallet account, and the operator background system corresponding to the transaction initiating device updates the digital currency in the account corresponding to the transaction initiating device.

That the operator background system corresponding to the target wallet account updates the digital currency in the target wallet account includes: the coin string in the target wallet account is deducted, or the coin string in the target wallet account is added.

Correspondingly, that the operator background system corresponding to the transaction initiating device updates the digital currency in the account corresponding to the transaction initiating device includes: a coin string in the account corresponding to the transaction initiating device is deducted, or the coin string in the account corresponding to the transaction initiating device is added.

In some embodiments, in the scenario where the transaction initiating device is the collection device and the hardware wallet is the payment device, the operator background system corresponding to the target wallet account may deduct the coin string in the target wallet account, and the amount deducted is the amount that the hardware wallet is subjected to the transaction with the transaction initiating device.

The operator background system corresponding to the transaction initiating device may add the coin string in the account corresponding to the transaction initiating device, and the amount added is the amount that the hardware wallet is subjected to the transaction with the transaction initiating device.

Correspondingly, in the scenario where the transaction initiating device is the payment device and the hardware wallet is the collection device, the operator background system corresponding to the target wallet account may add the coin string in the target wallet account, and the amount added is the amount that the hardware wallet is subjected to the transaction with the transaction initiating device.

The operator background system corresponding to the transaction initiating device may deduct the coin string in the account corresponding to the transaction initiating device, and the amount deducted is the amount that the hardware wallet is subjected to the transaction with the transaction initiating device.

In a possible implementation, the transaction method further includes: the transaction initiating device receives transaction success information sent by the operator background system corresponding to the transaction initiating device when the operator background system corresponding to the transaction initiating device successfully updates the digital currency in the account corresponding to the transaction initiating device, and displays the transaction success information.

That the transaction initiating device displays the transaction success information may include: the transaction success information is displayed through a display, the transaction success information is played through an audio player, etc.

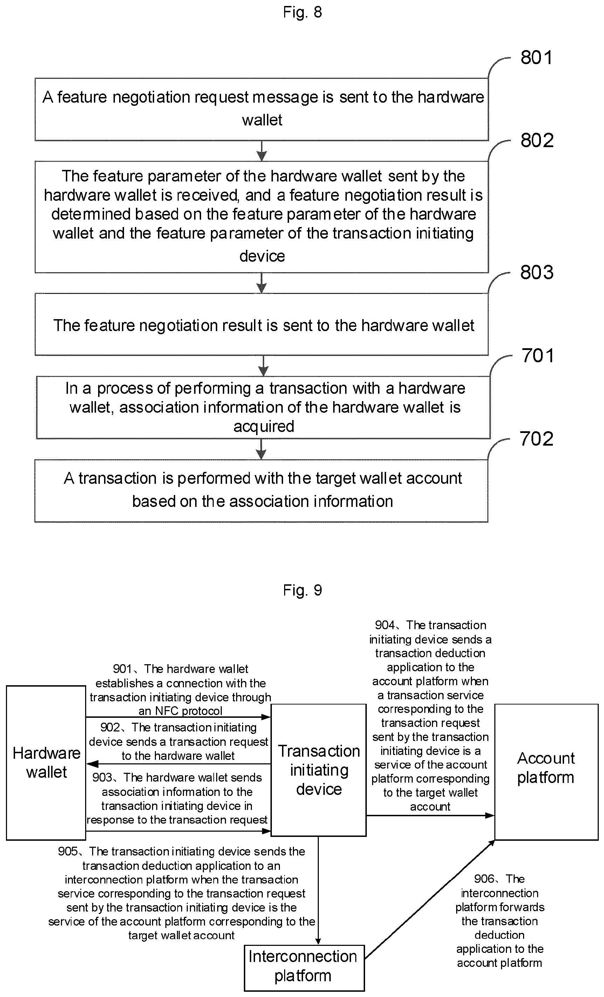

In a possible implementation, before the hardware wallet initiates a transaction with the transaction initiating device, feature negotiation may be performed in advance to determine whether a feature parameter of the hardware wallet is consistent with that of the transaction initiating device, so as to reduce the probability of failed transactions caused by different feature parameters of the hardware wallet and transaction initiating device. In this case, with reference to Fig. 7, as shown in Fig. 8, before S701, the transaction method provided in some embodiments of the present disclosure further includes S801 to S803.

At S801, the transaction initiating device sends a feature negotiation request message to the hardware wallet.

The feature negotiation request message is configured to request negotiation of the feature parameters of the hardware wallet and transaction initiating device. The feature parameter includes one or more of the following: version information of a digital currency string expression, application version information, a transaction mode, a device type, and a networking parameter.

At S802, the transaction initiating device receives the feature parameter of the hardware wallet sent by the hardware wallet, and determines a feature negotiation result based on the feature parameter of the hardware wallet and the feature parameter of the transaction initiating device.

In a possible implementation, the transaction initiating device may determine whether the feature parameter of the hardware wallet is consistent with the feature parameter of the transaction initiating device.

When determining that the feature parameter of the hardware wallet is consistent with the feature parameter of the transaction initiating device, the transaction initiating device may determine that the feature negotiation result is a successful negotiation.

When determining that the feature parameter of the hardware wallet is not consistent with the feature parameter of the transaction initiating device, the transaction initiating device may update its own feature parameter (e.g., updating an application version, etc.), and determine that the feature negotiation result is the successful negotiation when determining that the updated feature parameter is consistent with the feature parameter of the hardware wallet.

When determining that the feature parameter of the hardware wallet is not consistent with the feature parameter of the transaction initiating device, the transaction initiating device may also send a feature parameter updating request to the hardware wallet to request the hardware wallet to update the feature parameter of the hardware wallet (e.g., updating the application version, etc.). Then, the transaction initiating device may receive the updated feature parameter sent by the hardware wallet, and determine that the feature negotiation result is the successful negotiation when determining that the updated feature parameter is consistent with the feature parameter of the hardware wallet.

At S803, the transaction initiating device sends the feature negotiation result to the hardware wallet.

When the hardware wallet establishes a connection relationship with the transaction initiating device, the feature negotiation result may be determined in advance. The hardware wallet may realize selection of a fast transaction mode through a feature negotiation mechanism, such that a transaction time is greatly shortened, and operational burdens of cashiers and consumers are reduced.

Fig. 9 is a flowchart of another transaction method according to some embodiments. The transaction method is applied to the hardware wallet 101 and the transaction initiating device 103 in Fig. 1.

As shown in Fig. 9, the transaction method includes S901 to S906 below.

At S901, the hardware wallet establishes a connection with the transaction initiating device through an NFC protocol.

At S902, the transaction initiating device sends a transaction request to the hardware wallet.

At S903, the hardware wallet sends association information to the transaction initiating device in response to the transaction request.

In some embodiments, the hardware wallet sends the association information to the transaction initiating device in response to the transaction request, such that the transaction initiating device sends the transaction request to an account platform corresponding to a target wallet account based on the association information.

At S904, the transaction initiating device sends a transaction deduction application to the account platform when a transaction service corresponding to the transaction request sent by the transaction initiating device is a service of the account platform corresponding to the target wallet account.

At S905, the transaction initiating device sends the transaction deduction application to an interconnection platform when the transaction service corresponding to the transaction request sent by the transaction initiating device is not the service of the account platform corresponding to the target wallet account.

At S906, the interconnection platform forwards the transaction deduction application to the account platform.

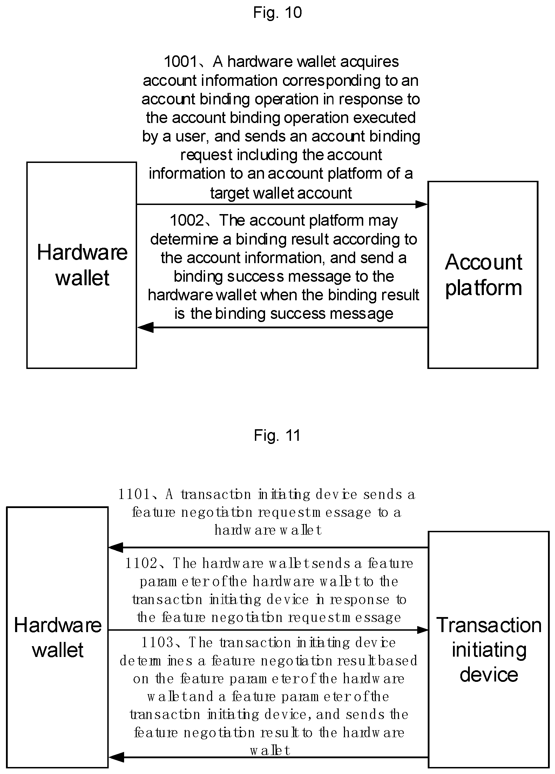

Fig. 10 is a flowchart of another transaction method according to some embodiments. As shown in Fig. 10, the transaction method includes S1001 to S1002 below.

At S1001, a hardware wallet acquires account information corresponding to an account binding operation in response to the account binding operation executed by a user, and sends an account binding request including the account information to an account platform of a target wallet account.

At S1002, the account platform may determine a binding result according to the account information, and send a binding success message to the hardware wallet when the binding result is the binding success message.

Fig. 11 is a flowchart of another transaction method according to some embodiments. As shown in Fig. 11, the transaction method includes S1101 to S1103 below.

At S1101, a transaction initiating device sends a feature negotiation request message to a hardware wallet.

At S1102, the hardware wallet sends a feature parameter of the hardware wallet to the transaction initiating device in response to the feature negotiation request message.

At S1103, the transaction initiating device determines a feature negotiation result based on the feature parameter of the hardware wallet and a feature parameter of the transaction initiating device, and sends the feature negotiation result to the hardware wallet.

In some embodiments, in a process of circulation of digital currency, as a physical medium for storing the e-CNY that is opened through a counter or an electronic channel, the hardware wallet may be used by a user in the forms of a mobile terminal, a card, a wearable device, or the like. For example, when the user needs to pay consumption expenses to a POS machine, the hardware wallet in the form of the mobile terminal may be touched to the POS machine, such that deduction is performed from a balance of the hardware wallet, so as to complete a payment.

Generally, payment processes using the hardware wallet are all performed by depending on the balance of the hardware wallet. Therefore, in order to ensure a smooth payment process using the hardware wallet, the user generally needs to recharge the balance of the hardware wallet in advance such that the hardware wallet has a sufficient balance for payments. However, for the above payment mode that presupposes a sufficient balance in the hardware wallet, the user needs to clearly know the balance of the hardware wallet, and the user also needs to irregularly and separately recharge the balance of the hardware wallet, leading to great reduction in convenience for the user to pay with the hardware wallet.

In view of the above problems, some embodiments of the present disclosure provide the transaction method. When the user performs a transaction with the hardware wallet, the hardware wallet transmits the hardware wallet identifier to the collection device, the collection device sends the received hardware wallet identifier and the collection amount to the corresponding server, such that the server determines the target wallet account associated with the hardware wallet and the balance corresponding to the target wallet account. The server uses the fact that the balance is greater than or equal to the collection amount as a deduction condition of the target wallet account, updates the digital currency in the balance of the target wallet account by using the collection amount as an updated amount when the deduction condition of the target wallet account is met, and updates digital currency of a collection account corresponding to the collection device such that deduction is directly performed from the balance of the target wallet account based on operations of the hardware wallet in a transaction process.

Through the transaction method, when the hardware wallet is used for payments in the transaction process, automatic deduction is can be directly performed from the target wallet account associated with the hardware wallet, such that the step of recharging the balance of the hardware wallet in advance is omitted, detection processes and transaction processes are simplified, thereby improving detection efficiency and transaction speeds. Therefore, disadvantages of cumbersome user operations caused by insufficient balance of the hardware wallet, which not only needs the user to perform a recharging process operation, but also needs the user to restart a transaction process operation.

Implementation architectures involved in some embodiments of the present disclosure are introduced below.

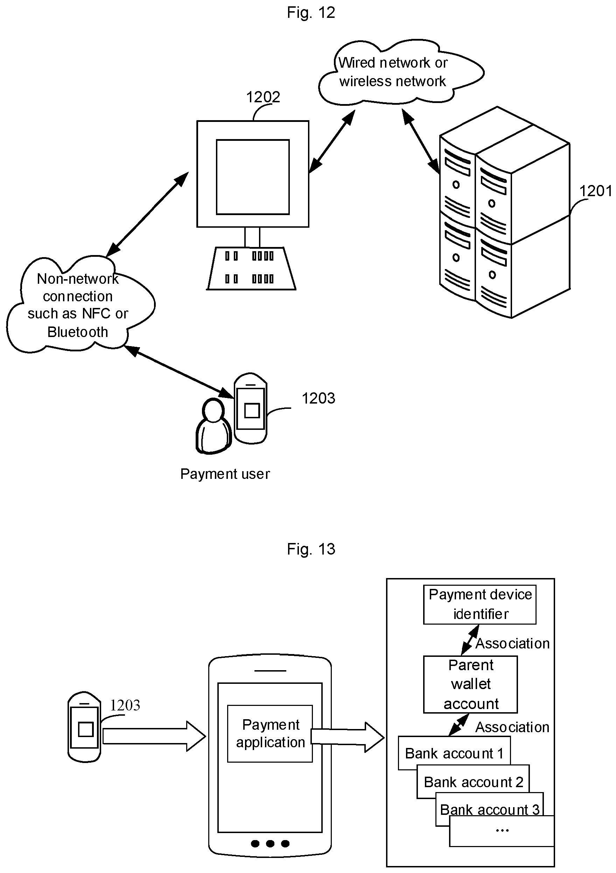

Fig. 12 is a schematic diagram of a transaction system according to some embodiments of the present disclosure. As shown in Fig. 12, the transaction system includes a server 1201, a collection device 1202, and a payment device 1203. The server 1201 may establish a connection with the collection device 1202 through a wired network or a wireless network, and the payment device 1203 and the collection device 1202 are connected through an NFC non-network connection or a Bluetooth non-network connection.

The payment device in some embodiments of the present disclosure corresponds to a user account. The user account is an account corresponding to a user opening the payment device. The payment device is opened and issued by a payment device institution (e.g., a bank institution or a financial affiliated institution). A user wallet account (e.g., a personal wallet account) associated with the user account is used as a target wallet account of the payment device, that is, the payment device is associated with the target wallet account. When a payment is made from the payment device to the collection device, the collection device sends a device identifier of the payment device and a collection amount to the server corresponding to the collection device, and the server corresponding to the collection device performs deduction from a balance of the target wallet account according to the comparison of the balance of the target wallet account with the collection amount.

In some embodiments, a user operating the collection device is referred to as a receiving user, and a user operating the payment device is referred to as a payment user.

In some implementations, the payment device may be a hardware wallet. The device identifier of the payment device is a hardware wallet identifier. In some embodiments, the hardware wallet may be a mobile payment terminal device provided with a security chip, or may be a card provided with the security chip, or may also be a wearable device (e.g., a payment device in a form of a watch) provided with the security chip. Therefore, the formation of the hardware wallet is not limited.

In some implementations, as shown in Fig. 13, the payment device 1203 may correspond to a payment application. In some embodiments, a content display mode on the payment application is similar to a display mode of digital currency related information in a bank application. The payment application may display related information of a payment account providing a payment source to the payment device 1203, for example, related information of the target wallet account, and the target wallet account may be associated with one or more bank accounts, such as a bank account 1, a bank account, 2, a bank account 3, ...

In some embodiments, the payment application is installed on the terminal device, and displays a payment device identifier (e.g., the hardware wallet identifier), the target wallet account, and association information of the payment device identifier and the target wallet account on a content display interface of the terminal device, for example, the association information. In some embodiments, the user manually operates the payment application of the terminal device of the user, for example, inputting information such as device identifier information, association information, and binding authentication information of the payment device, so as to complete corresponding binding between the payment device and the payment application. For another example, the terminal device performs information interaction transmission with the payment device 1203 via NFC or Bluetooth, instead of inputting the information manually by the user, thereby realizing the corresponding binding between the terminal device and the payment device. Therefore, the binding mode of binding the payment device and the payment application is not limited.

It is to be noted that, the payment application may also have an independent online payment function to interact with other receiving applications, so as to complete the updating of digital currency of an account of the payment application and the updating of digital currency of an account of a receiving application; and the payment application may also have an independent online receiving function. Based on this, whether an application corresponding to the target wallet account is the payment application with the independent function or an application with an integrated function for receiving and payment is not limited in the present disclosure.

In some embodiments, the server includes a database or is connected to the database, and an association relationship between the device identifier of the payment device and the target wallet account may be stored in the database. The collection device may implement an access operation on the related information of the target wallet account in the database through the server.

In some other embodiments, the server may be a single server, or may also be a server cluster constituted by a plurality of servers. In some implementations, the server cluster may also be a distributed cluster. An implementation mode of the server is not limited in the present disclosure.

The terminal device may be a device that may be installed with and use the payment application, such as a mobile phone, a tablet computer, a desktop computer, a laptop computer, a handheld computer, a notebook computer, an Ultra-Mobile Personal Computer (UMPC), and a netbook, as well as a cellular phone, a Personal Digital Assistant (PDA), an Augmented Reality (AR)/Virtual Reality (VR) device, and the like, and the form of the terminal is not limited in the present disclosure. The terminal device may perform human-computer interaction with the user through one or more manners such as a keyboard, a touch pad, a touch screen, a remote control, a voice interaction or handwriting device, and the like.

In some embodiments, in the transaction system shown in Fig. 12, the server may be communicatively connected to at least one collection device. The number and type of the collection devices are not limited in the present disclosure.

In some embodiments, in the transaction system shown in Fig. 12 and Fig. 13, the server may be connected to at least one terminal device, and the payment application corresponding to the payment device is installed in the terminal device. The number and type of the terminal devices are not limited in the present disclosure.

The transaction method provided in some embodiments of the present disclosure may be applied to the server in Fig. 12. For ease of understanding, for example, the target wallet account is used as a parent wallet, the transaction method provided in some embodiments of the present disclosure is introduced below with reference to the drawings.

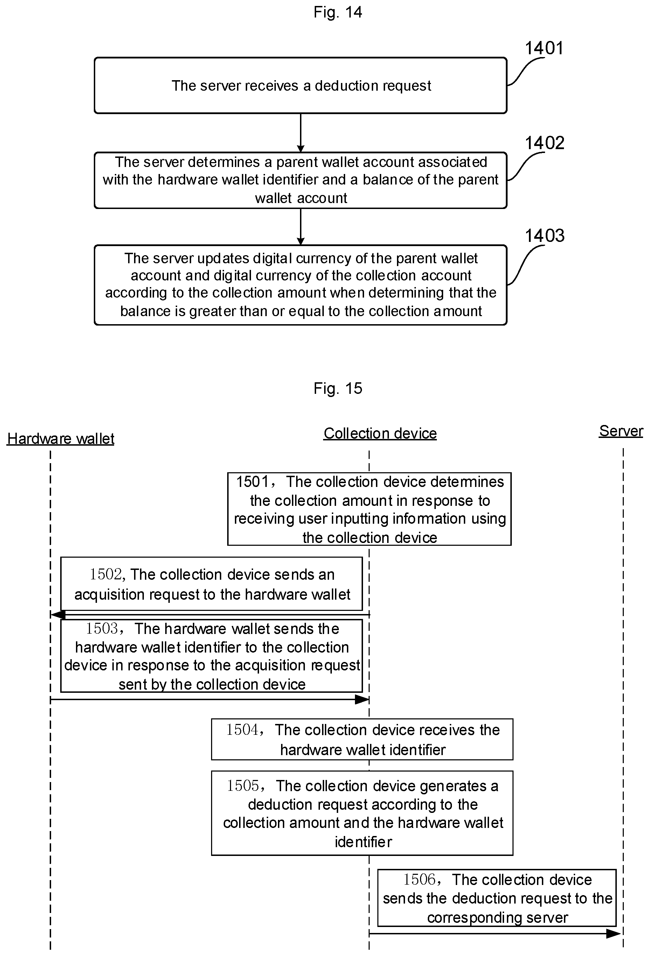

Fig. 14 is a flowchart of a transaction method according to some embodiments. As shown in Fig. 14, the transaction method, when being applied to the server in the transaction system, includes S1401 to S1403 below.

At S1401, the server receives a deduction request.

The deduction request is sent by a collection device in response to acquiring of a hardware wallet identifier corresponding to a hardware wallet, and the deduction request includes the hardware wallet identifier and a collection amount. The hardware wallet identifier is configured to determine an identifier of the hardware wallet.

It is to be noted that, the hardware wallet of some embodiments of the present disclosure establishes a connection with the collection device through a wireless non-network technology such as NFC or Bluetooth.

Correspondingly, the collection device can perform wireless non-network technology communication with the hardware wallet, and the collection device is certified and licensed by an issuing institution of the hardware wallet and an issuing institution of the collection device together. For example, the collection device may be a POS machine.

In some embodiments, a user operating the collection device is referred to as a receiving user, and a user operating the hardware wallet is referred to as a payment user.

In combination with an interaction process of S1501 to S1506 shown in Fig. 15, a scenario of generating the "deduction request" in S1401 is described below.

At S1501, the collection device determines the collection amount in response to receiving user inputting information using the collection device.

The receiving user inputting information includes at least the collection amount. In some embodiments, when a buyer pays a transaction fee to a seller, the seller (i.e., the receiving user) inputs the collection amount on the collection device, and lets the buyer (i.e., the payment user) to determine that the collection amount is correct, so as to determine the collection amount.

At S1502, the collection device sends an acquisition request to the hardware wallet.

The acquisition request is configured to indicate a request that acquires the hardware wallet identifier.

In some implementations, the acquisition request may further include a collection device identifier of the collection device.

At S1503, the hardware wallet sends the hardware wallet identifier to the collection device in response to the acquisition request sent by the collection device.

In combination with implementations in S1502, the payment device performs hardware authentication on the collection device according to the collection device identifier, so as to ensure that the collection device matches the payment device. In some embodiments, the payment device stores the collection device identifier corresponding to each collection device, and each collection device can be suitable for the payment device and match the payment device. The payment device compares a receiving identifier in the acquisition request with each collection device identifier stored in the collection device, so as to determine whether each collection device identifier includes the receiving identifier in the acquisition request. If each collection device identifier includes the receiving identifier in the acquisition request, hardware authentication is passed, and the hardware wallet identifier is sent to the collection device; and if each collection device identifier does not include the receiving identifier in the acquisition request, the acquisition request is rejected.

At S1504, the collection device receives the hardware wallet identifier.

At S1505, the collection device generates a deduction request according to the collection amount and the hardware wallet identifier.

At S1506, the collection device sends the deduction request to the corresponding server.

Compared to the implementation in S1502, in another implementation, the collection device identifier may also include, in the deduction request sent to the server, causing the server to perform software authentication on the collection device, so as to ensure that the collection device matches the payment device.

At S1402, the server determines a parent wallet account associated with the hardware wallet identifier and a balance of the parent wallet account.

The parent wallet account of the hardware wallet identifier may be a user wallet account (i.e., a personal wallet such as a WeChat wallet and Alipay) associated with a payment user account. Based on this, the parent wallet account may be the user wallet account (i.e., a personal wallet account such as an Alipay account and a WeChat wallet account); and the balance of the parent wallet account may be a limit of a balance of the user wallet account (e.g., a balance of the Alipay account).

The server may determine the associated parent wallet account according to one of the two implementations below.

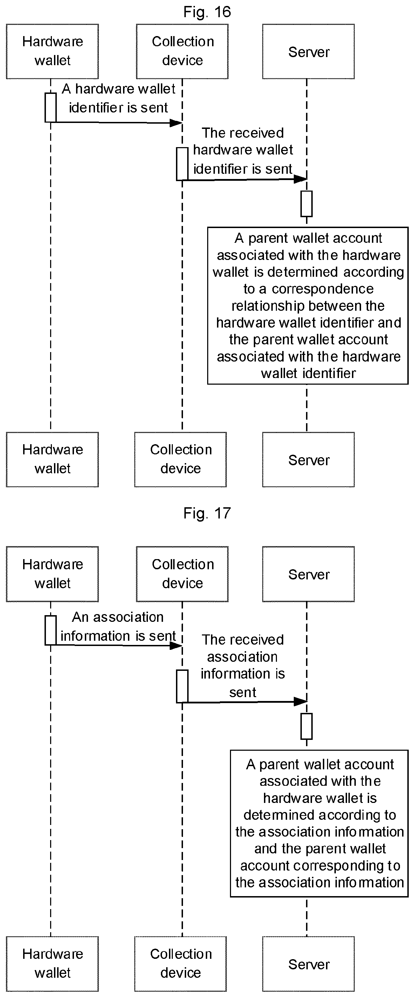

As a possible implementation, an association relationship between the hardware wallet identifier and the parent wallet account is stored in a database corresponding to the server in advance. The server determines the parent wallet account associated with the hardware wallet identifier according to the hardware wallet identifier in the deduction request and the association relationship in the database. As shown in Fig. 16, the process of determining the parent wallet account in this implementation includes the following: the hardware wallet sends the hardware wallet identifier to the collection device; the collection device sends the received hardware wallet identifier to the server; and the server determines the parent wallet account associated with the hardware wallet according to a correspondence relationship between the hardware wallet identifier and the parent wallet account associated with the hardware wallet identifier. In this implementation, the server determines the parent wallet account based on the hardware wallet identifier of the payment device.

As another possible implementation, the deduction request further includes association information, and the association information is configured to indicate an identifier of the parent wallet account associated with the hardware wallet. S1402 may be implemented through the following steps.

The server determines the parent wallet account associated with the hardware wallet according to the association information associated with the hardware wallet identifier.

In some embodiments, the association information is also referred to as an association code. The database corresponding to the server stores a correspondence relationship between the association information and the parent wallet account in advance. The server determines the parent wallet account associated with the hardware wallet according to the association information in the deduction request and the correspondence relationship in the server. As shown in Fig. 17, the process of determining the parent wallet account includes the following: the collection device sends the association information to the payment device; the payment device sends the received association information to the server; and the server determines the parent wallet account associated with the hardware wallet according to the association information and the parent wallet account corresponding to the association information.

In this implementation, the payment device stores the hardware wallet identifier and the corresponding association information in advance, such that the association information and the hardware wallet identifier are sent to the collection device together during payment, and the collection device may generate the deduction request including the association information. The database corresponding to the server stores the correspondence relationship between the association information and the parent wallet account in advance. Based on this, the server can determine the parent wallet account associated with the hardware wallet by using the correspondence relationship according to the association information in the deduction request. The implementation of directly determining the parent wallet account according to the association information sent by the payment device is simple in logic and high in feasibility, and since the association information belongs to hardware storage, the stored association information is high in reliability, and then the process of determining the parent wallet account is higher.

At S1403, the server updates digital currency of the parent wallet account and digital currency of the collection account according to the collection amount when determining that the balance is greater than or equal to the collection amount.

"Updating" may be understood as: generating a new digital currency coin string to replace an original digital currency coin string, or adding the digital currency coin string.

The digital currency of the target wallet account is updated (e.g., the original digital currency coin string is replaced with the new digital currency coin string) with an amount that is deducted from the target wallet account (i.e., the parent wallet) for payment. The digital currency of the collection account is updated (e.g., the digital currency coin string is added) with an amount that is added to the collection account for receiving.

Based on the implementations, when the user performs a transaction with the hardware wallet, the hardware wallet transmits the hardware wallet identifier to the collection device, the collection device sends the received hardware wallet identifier and the collection amount to the corresponding server, such that the server determines the parent wallet account associated with the hardware wallet and the balance corresponding to the parent wallet. The server then uses the fact that the balance is greater than or equal to the collection amount as a deduction condition of the parent wallet, deducts the digital currency of the collection amount from the balance of the parent wallet account when the deduction condition of the parent wallet account is met, and updates the deducted money to the collection account corresponding to the collection device such that deduction is directly performed from the balance of the parent wallet account based on operations of the hardware wallet in a transaction process. Therefore, when the hardware wallet is used for payments in the transaction process, automatic deduction is can be directly performed from the parent wallet account associated with the hardware wallet, such that the step of recharging the balance of the hardware wallet in advance is omitted, detection processes and transaction processes are simplified, thereby improving detection efficiency and transaction speeds. Therefore, disadvantages of cumbersome user operations caused by insufficient balance of the hardware wallet, which not only needs the payment user to perform a recharging process operation, but also needs the payment user to restart a transaction process operation.

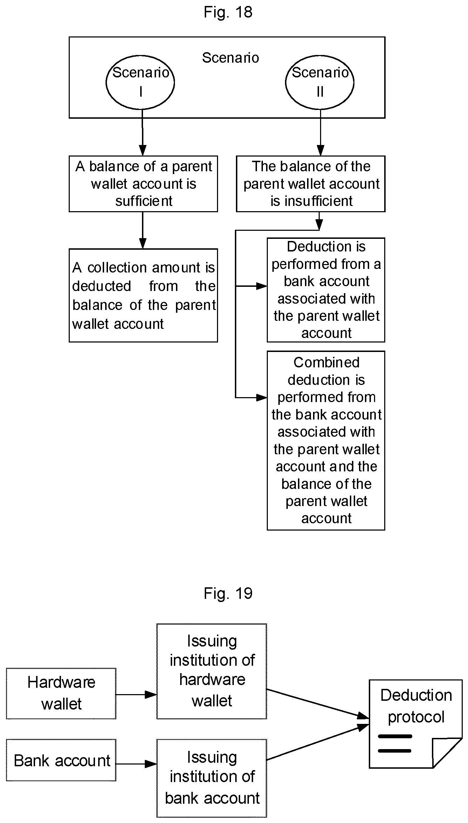

As shown in Fig. 18, the manner of updating the digital currency of the parent wallet account is further described below with reference to two scenarios. It may be understood that, the server updates the digital currency of the collection amount in the parent wallet account and the digital currency of the collection account according to a comparison result of the balance and the collection amount. Implementation steps corresponding to the following two scenarios may be included.

Scenario I, as implemented in S1403 above, when the balance of the parent wallet account is sufficient, that is, the balance is greater than or equal to the collection amount, the collection amount is deducted from the balance of the parent wallet account.

Scenario II, when the balance of the parent wallet account is insufficient, there may be two deduction modes below.
(1) Deduction is performed from a bank account associated with the parent wallet account.
   In some embodiments, bank account information of at least one bank account associated with the parent wallet account is acquired; when the balance is less than the collection amount, a target bank account is determined from the at least one bank account according to the bank account information of the at least one bank account; and according to the collection amount, a deposit amount of the target bank account and the digital currency of the collection account are updated. In this implementation, when the balance of the parent wallet account is insufficient, a payment is no longer performed by using the balance in the parent wallet account, but a target bank account is used for withholding payment, so as to realize the withholding of the collection amount by using the bank account associated with the parent wallet account.
(2) Combined deduction is performed from the bank account associated with the parent wallet account and the balance of the parent wallet account.

In some embodiments, the bank account information of the at least one bank account associated with the parent wallet account is acquired; when the balance is less than the collection amount, the target bank account is determined from the at least one bank account according to the bank account information of the at least one bank account; a difference amount between the collection amount and the balance is determined; and the digital currency of the parent wallet account is updated according to the balance, the deposit amount of the target bank account is updated according to the difference amount, and the digital currency of the collection account is updated according to the collection amount. In this implementation, when the balance of the parent wallet account is insufficient, the balance is first paid by the parent wallet account, and then the difference amount is deducted from the target bank account to supplement the insufficient balance, so as to realize the supplementary deduction of the difference amount by using the bank account associated with the parent wallet account.

That "the target bank account is determined from the at least one bank account according to the bank account information of the at least one bank account" in Scenario II is further described below.

In some embodiments, the bank account information includes the at least one bank having different deduction priorities and digital currency updating limits. In some embodiments, that the target bank account is determined from the at least one bank account according to the bank account information of the at least one bank account is implemented through the following manners: according to the deduction priority of each bank account, whether a deposit amount updating limit of each bank account is greater than or equal to an amount to be updated is determined one by one, until the target bank account with the digital currency updating limit greater than or equal to the amount to be updated is determined. The amount to be updated may be the collection amount and the difference amount.

In some embodiments, the digital currency updating limit is determined by an allowable transfer limit threshold of the bank account and a deposit amount of the bank account together. If the allowable transfer limit threshold of the bank account is greater than or equal to the deposit amount of the bank account, the deposit amount updating limit of the bank account is the deposit amount of the bank account; and if the allowable transfer limit threshold of the bank account is less than the deposit amount of the bank account, the deposit amount updating limit of the bank account is the allowable transfer limit threshold of the bank account.

In some embodiments, the digital currency updating limit is determined together by a deduction protocol shown in Fig. 19 signed by an issuing institution corresponding to the bank account and an issuing institution of the hardware wallet, as well as the deposit amount of the bank account. The deduction protocol is configured to indicate that the bank account can perform deduction for the hardware wallet.

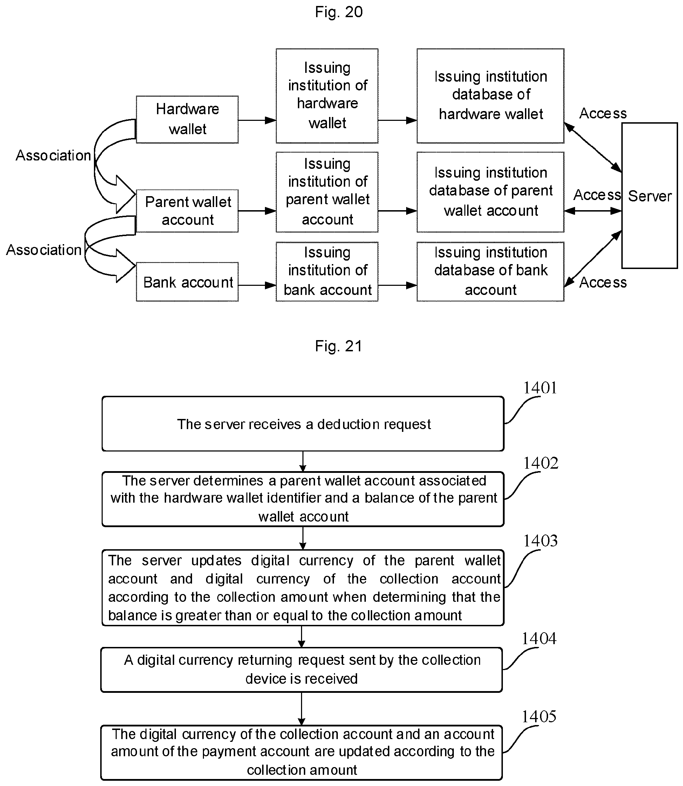

In some embodiments, when the bank account information includes the deduction protocol, the deposit amount updating limit of the bank account is the deposit amount of the bank account; and when the bank account information does not include the deduction protocol, the deposit amount updating limit of the bank account is zero. It is to be noted that, as shown in Fig. 20, the hardware wallet, the parent wallet account, and each bank account respectively correspond to the issuing institution of the hardware wallet, the issuing institution of the parent wallet account, and the issuing institution of the bank account. The issuing institutions respectively correspond to different databases, which are an issuing institution database of the hardware wallet, an issuing institution database of the parent wallet account, and an issuing institution database of the bank account. The databases of the issuing institutions store related information (e.g., the hardware wallet identifier, account information of the hardware wallet, parent wallet account information, account information of the bank account, the association information, etc.) issued by the corresponding issuing institutions. The server interactively accesses to the database of each issuing institution, so as to achieve information sharing.

The at least one bank account has different deduction priorities. In some embodiments, the deduction priority of each bank account may be determined according to a sequence in which each bank account is associated with the parent wallet account; or the deduction priority of each bank account may be determined according to previous digital currency updating frequencies of each bank account and the parent wallet account; or the deduction priority of each bank account may be set according to requirements of the user associated with the hardware wallet. Therefore, the manner of determining the deduction priority of each bank account is not limited in the present disclosure.

In some other embodiments, each bank account having different deduction priorities may be successively associated with the hardware wallet according to the sequence of the deduction priorities from large to small, such that when the bank account is required for payment, the deposit amount of the bank account can be used as a payment source to be paid in sequence according to the sequence of the deduction priorities from large to small.

Compared to the situation in which the target bank account is determined, the following implementation is provided for the situation in which the target bank account is determined from the at least one bank account. When the target bank account is not determined, the deduction request sent by the collection device is rejected, and a first prompt instruction is sent to the collection device. The first prompt instruction is prompt information instructing the collection device to display a failed digital currency transaction. In this implementation, the target bank account being not determined indicates that the parent wallet account of the hardware wallet and the bank account associated with the parent wallet both have no payment capability to pay the digital currency of the collection amount. Therefore, when the target bank account is not determined, a transaction is rejected or the transaction is stopped.

The following implementation is provided for the determination of the target bank account in the deduction mode (1) in Scenario II. According to the deduction priority of each bank account, whether the deposit amount updating limit of each bank account is greater than or equal to the collection amount is determined one by one, until the target bank account with the digital currency updating limit greater than or equal to the collection amount is determined. In this implementation, it ensures that the deposit amount updating limit of the target bank account is greater than or equal to the collection amount, so as to guarantee the feasibility of the target bank account to the withholding of the collection amount.

The following implementation is provided for the determination of the target bank account in the deduction mode (2) in Scenario II. According to the deduction priority of each bank account, whether the deposit amount updating limit of each bank account is greater than or equal to a difference is determined one by one, until the target bank account with the digital currency updating limit greater than or equal to the difference amount is determined. In this implementation, it ensures that the deposit amount updating limit of the target bank account is greater than or equal to the difference amount, so as to guarantee the feasibility of the target bank account replenishment the supplementary deduction of the difference amount.

Different payment sources, which are the balance of the parent wallet account and/or the deposit amount of the at least one bank account, are provided for different balances in the parent wallet account, such that a transaction deduction not only depends on the payment source of the balance of the parent wallet, but also depends on the deposit amount of the at least one bank account associated to the parent wallet account, supplementary deduction on the difference amount or deduction withholding on the collection amount. Based on this, the deduction modes with different payment sources can ensure that the digital currency with more payment sources is updated to the collection account, so as to increase a success rate of deduction, thereby improving the reliability of a transaction process.

As a possible implementation, the account information of the hardware wallet includes a maximum limit threshold that the digital currency is allowed to be updated. The following implementation processes may also be executed before S1403, so as to complete limitation of a payment limit.
(a) The maximum limit threshold that the digital currency is allowed to be updated corresponding to the hardware wallet is acquired according to the hardware wallet identifier.
   The maximum limit threshold may be set by a user opening the hardware wallet according to a payment requirement of the user, or may also be set by the issuing institution issuing the hardware wallet.
(b) When it is determined that the collection amount is less than or equal to the maximum limit threshold, the balance of the parent wallet account is compared with the collection amount.
   In some embodiments, the collection amount is compared with the maximum limit threshold, and when the collection amount is less than or equal to the maximum limit threshold, the implementation step (e.g., S1403) of Scenario I and the implementation step of Scenario II can be executed to ensure that the transaction limit of a hardware wallet does not exceed the maximum limit threshold.
(c) When it is determined that the collection amount is greater than the maximum limit threshold, the deduction request sent by the collection device is rejected.

In some embodiments, when the collection amount is greater than the maximum limit threshold, the transaction in which the transaction limit (i.e., a payment limit) exceeds the maximum limit threshold is stopped, such that the transaction limit of the transaction occurring based on the hardware wallet is within a range that is permitted by the user or hardware wallet issuing institution, thereby guaranteeing the reliability of the transaction.

The two implementations that the server acquires the account information of the hardware wallet are described in detail.

Implementation I: the account information of the hardware wallet may be acquired by the server from a database connected to the server. In some embodiments, the hardware wallet issuing institution can provide the account information of the hardware wallet. With reference to Fig. 20, the hardware wallet issuing institution stores the account information of the hardware wallet in the database. The server accesses the database according to the hardware wallet identifier, and the database can provide the account information stored in the database for the server.

Implementation II: for the account information of the hardware wallet, the account information of the hardware wallet sent by the payment device may also be forwarded to the server by the collection device. In some embodiments, the payment device sends the account information of the hardware wallet to the collection device; and the collection device sends the account information to the server. In some embodiments, the deduction request further includes the account information of the hardware wallet. In this example, the process of obtaining the account information of the hardware wallet by the server is the same as that of acquiring the hardware wallet identifier by the server.

It is to be noted, the two manners of acquiring the account information are only examples. Therefore, the manner of acquiring the account information is not limited.

In this implementation, after receiving the deduction request, the server compares the collection amount with the maximum limit threshold to determine whether to continue a transaction payment process, such that the transaction limit of the occurred transaction does not exceed the maximum limit threshold, thereby avoiding the problem of generating overpayment.

As another possible implementation, the account information of the hardware wallet further includes state information, and the state information is configured to represent that the hardware wallet is in an available state or a non-available state. The non-available state includes one or more of a lost state, a logged off state, a frozen state, and a suspended state.

The implementation based on the hardware wallet being in the available state is as follows: before S1403 and after the deduction request is received, the following implementation processes may also be executed: first, the state information of the hardware wallet is acquired according to the hardware wallet identifier; and then, the collection amount is compared with the maximum limit threshold when it is determined that the state information is in the available state. In this implementation, when the state information is in the available state, the implementation step (e.g., S1403) of Scenario I and the implementation step of Scenario II can be executed to ensure that a payment process of the payment limit is performed when the hardware wallet is in the available state, so as to prevent the hardware wallet from perform an incorrect transaction in an abnormal state (i.e., the non-available state), thereby guaranteeing the reliability of the payment process of the hardware wallet.

Correspondingly, the implementation based on the hardware wallet being in the non-available state is as follows: when it is determined that the state information is in the non-available state, the deduction request sent by the collection device is rejected, and a second prompt instruction is sent to the collection device. The second prompt instruction is prompt information that is configured to instruct the collection device to display that the hardware wallet is in the non-available state. In this implementation, when the hardware wallet is determined to be in the non-available state, the transaction in which the hardware wallet is abnormal is stopped such that the payment process of the transaction is executed by using the hardware wallet in the available state, so as to prevent the hardware wallet from executing a payment in the non-available state, thereby guaranteeing the reliability of the transaction.

In a possible implementation, the account information further includes a password-free limit threshold that the digital currency is allowed to be updated in a password-free manner, and the password-free limit threshold is less than the maximum limit threshold.

In some embodiments, the password-free limit threshold may be set by the user opening the hardware wallet according to the payment requirement of the user, or may also be set by the issuing institution issuing the hardware wallet, and the present disclosure is not limited thereto.

In a payment process to an account, a password-free payment or password authentication payment is completed through the following implementations.

When the collection amount is greater than the password-free limit threshold, a password authentication instruction is sent to the collection device, and the password authentication instruction is configured to instruct the user using the hardware wallet to input password information; the password information returned by the collection device is received and authenticated; and when the password information is authenticated, the digital currency of the target wallet account and the digital currency of the collection account are updated according to the collection amount. It may be understood that, a deposit amount of the collection amount in the deposit amount of the target bank account or the digital currency of the collection amount in the balance of the parent wallet account is updated; and the digital currency of the collection account is updated.

When the collection amount is less than the password-free limit threshold, the digital currency of the collection amount is directly updated, and a payment is completed without password authentication.

Through the implementation, a payment mode of the password-free payment or password authentication payment can be determined according to a comparison result of the collection amount and the password-free limit threshold, such that the password-free payment is performed when the collection amount paid by the hardware wallet is small, and the password authentication payment is performed when the collection amount paid by the hardware wallet is small.

In a possible implementation, with reference to Fig. 14, as shown in Fig. 21, after S1403, the method further includes S1404 and S1405, that is, after a payment is completed, the following implementation processes may also be executed to complete a transaction refund.

At S1404, a digital currency returning request sent by the collection device is received.

The digital currency returning request is configured to indicate that the updated digital currency of the collection account is returned to a payment account corresponding to the hardware wallet; and the payment account is at least one of the parent wallet account or the target bank account.

At S1405, the digital currency of the collection account and an account amount of the payment account are updated according to the collection amount.

In some embodiments, when the digital currency returning request is received, the digital currency of the collection account is updated according to the collection amount, and the updated digital currency is used for a refund. If the digital currency of the collection amount obtained by the collection account is from the parent wallet account, that is, the payment account is the parent wallet account, the digital currency in the balance of the parent wallet account is updated according to the collection amount, so as to complete the returning of the refund to the parent wallet account. If the digital currency of the collection amount obtained by the collection account is from the target bank account, that is, the payment account is the target bank account, the balance of the target wallet account is updated according to the collection amount, so as to complete the returning of the refund to the target bank account. If the digital currency of the collection amount obtained by the collection account is from the parent wallet account and the target bank account (e.g., the combined deduction mode of Scenario II), the digital currency of the target wallet account is updated according to the balance, and the deposit amount of the target bank account is updated according to the difference amount, so as to complete the returning of the refund to the target bank account and the parent wallet account, respectively.

In some embodiments, after the collection account fails to update the collection amount or the digital currency of the difference amount to the target bank account, the collection amount of the collection account or the digital currency of the difference amount is updated to the parent wallet account, such that the refund is transferred to the parent wallet account when a failed refund occurs in the target bank account.

Through the implementation, the digital currency of the collection account can be returned to the payment account, so as to ensure a normal refund can be performed when there is a refund requirement in a transaction.

In some embodiments, an e-CNY hardware wallet that has been published is mainly issued independently, that is, when the hardware wallet is issued, an association relationship between user identity information and an e-CNY value in an account is not established, a balance and a limit are both maintained independently when the hardware wallet is used, such that the associated use of an online account (i.e., an online wallet account corresponding to a user) or the hardware device cannot be realized. Such hardware wallet does not establish an association relationship with the online account when being opened. Although the hardware device may be used independently, recharging needs to be performed in advance. Furthermore, the hardware wallet has no real-name information. Although anonymity may be maintained, the problem of lost and theft swiping cannot be well solved. Moreover, balance sources of the hardware wallet are relatively unique, and the reverse tracing of funds cannot be realized.

In view of the above problem, some embodiments of the present disclosure provide the transaction method, which is applied to the transaction system. When the hardware wallet is required to be opened, the server corresponding to the hardware wallet issuing institution may generate target data of a target hardware wallet corresponding to a target wallet account of a target user based on application information when receiving the application information that is sent by the terminal device and configured to open the target hardware wallet, and use the target hardware wallet as a subsidiary wallet of the target wallet account such that the target hardware wallet shares a balance and payment limit corresponding to the target wallet account. Further, the target data including at least one of an identifier of the target hardware wallet or association information between the target hardware wallet and the target wallet account is sent to the terminal device or a hardware wallet platform device, such that the terminal device or the hardware wallet platform device opens the target hardware wallet based on the target data. Therefore, based on the method, when the hardware wallet is opened, the opened target hardware wallet may be associated with the target user, and the opened target hardware wallet may be associated with the target wallet account corresponding to the target user; and the target hardware wallet is used as the subsidiary wallet of the target wallet account, such that the use efficiency of the hardware wallet may be improved when the target user uses the hardware wallet.

An implementation environment (implementation architecture) involved in the method provided in some embodiments of the present disclosure is introduced below.

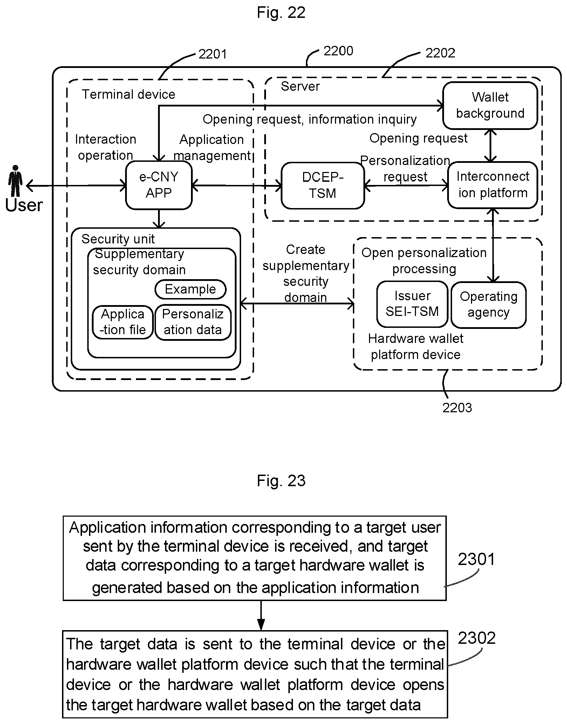

Fig. 22 is an implementation architecture diagram of some embodiments of the present disclosure. A transaction system 2200 includes a terminal device 2201, a server 2202, and a hardware wallet platform device 2203. The terminal device 2201, the server 2202, and the hardware wallet platform device 2203 may be connected through a wired mode or a wireless mode, so as to realize a data information interaction among the terminal device 2201, the server 2202, and the hardware wallet platform device 2203.

A target application program may be installed in the terminal device 2201. The target application program may be an e-CNY application program. The target application program is configured to apply to the opening of a hardware wallet. A transaction application is initiated based on a target wallet account, and application information corresponding to a target user is created when identity verification information corresponding to the target user is verified and the target user signs a payment service protocol; and the application information is sent to a server corresponding to a hardware wallet issuing institution, such that target data sent by the server is received, and a target hardware wallet is opened based on the target data.

It is to be noted that, the e-CNY application program is configured to manage a hardware wallet in an account mode, including functions such as aerial application issuance, aerial personalization issuance, application opening or activation, etc.

In some embodiments, the terminal device 2201 may further include a security unit, which is configured to determine whether the terminal device 2201 includes a security domain corresponding to the target hardware wallet and the terminal device meets a security writing condition; and when it is determined that the terminal device 2201 includes the security domain corresponding to the target hardware wallet and the terminal device 2201 meets the security writing condition, the target data is written to the terminal device 2201 to obtain the target hardware wallet.

In some embodiments, the terminal device 2201 may also activate, by reading data information in a target device, the target hardware wallet corresponding to the target data in the target device after identity information of the target user is verified.

The server 2202 may be a server corresponding to a bank. The server 2202 may include a wallet background system, an interconnection platform, and a Digital Currency Electronic Payment-Trusted Service Manager (DCEP-TSM) platform. The DCEP-TSM is mainly configured to manage an Applet version of a hardware wallet application, simultaneously receive an application initiated by an e-CNY APP and for opening a hardware wallet, and forward the application information to the hardware wallet issuing institution (i.e., the hardware wallet platform device 2203). The interconnection platform is mainly responsible for forwarding related information in a process of opening the hardware wallet. The wallet background system is configured to process data related to the hardware wallet, including transaction data, personalization data, setting parameters, etc.

In some embodiments, the server 2202 is configured to receive the application information corresponding to the target user sent by the terminal device 2201, generate target data corresponding to the target hardware wallet based on the application information, and send the target data to the terminal device 2201 or the hardware wallet platform device 2203 such that the terminal device 2201 or the hardware wallet platform device 2203 opens the target hardware wallet based on the target data.

In some embodiments, the server 2202 may also determine, in advance, whether there is a target wallet account, so as to generate the target data corresponding to the target hardware wallet when determining that there is the target wallet account and the target wallet account is in a normal state. Alternatively, the target wallet account is generated based on the application information when it is determined that there is no target wallet account.

The hardware wallet platform device 2203 may include a Secure Element Issuers-Trusted Service Manager (SEI-TSM, hardware device TSM) platform and the hardware wallet issuing institution. The hardware device TSM is responsible for managing creation and management of a security domain in the hardware device, as well as the downloading and writing of hardware wallet application data. The hardware wallet issuing institution is responsible for providing personalization data and main and subsidiary wallet association information of the hardware wallet.

In some embodiments, the hardware wallet platform device 2203 is configured to receive the target data sent by the server 2202, and write the target data to the target device to obtain the target hardware wallet.

Furthermore, it is to be noted that, user information (including but not limited to user device information, personal information of the users, bank card information of the users, etc.) involved in some embodiments of the present disclosure is information that is authorized by the users or fully authorized by all parties.

For ease of understanding, the transaction method provided in some embodiments of the present disclosure is introduced below with reference to the drawings.

Fig. 23 is a flowchart of a hardware wallet opening method according to some embodiments. The method is applied to a server corresponding to a hardware wallet issuing institution. Meanwhile, the method may also be applied to a terminal device, or the method may also be applied to a hardware wallet platform device. The method is described below by using an example that the method is applied to the server corresponding to the hardware wallet issuing institution. As shown in Fig. 23, the hardware wallet opening method includes S2301 to S2302 below.

At S2301, application information corresponding to a target user sent by the terminal device is received, and target data corresponding to a target hardware wallet is generated based on the application information.

The application information is configured to request opening of the target hardware wallet. The application information includes at least one of the following: user information, target wallet account information, or a payment service protocol. The user information includes at least one of the following: identity information, document information, contact information, or identity verification information. The target hardware wallet is a subsidiary wallet of a target wallet account corresponding to the target user. The target hardware wallet shares a balance and payment limit corresponding to the target wallet account. The target data includes at least one of the following: an identifier of the target hardware wallet, corresponding association information between the target hardware wallet and the target wallet account, or login verification information.

In some embodiments of the present disclosure, when the target user needs to open a hardware wallet, the application information may be sent to the server corresponding to the hardware wallet issuing institution based on the terminal device. Therefore, the server generates the target data corresponding to the target hardware wallet based on the application information, and sends the target data to the terminal device or the hardware wallet platform device such that the terminal device or the hardware wallet platform device opens the target hardware wallet corresponding to the target user based on the target data.

In some embodiments, the server corresponding to the hardware wallet issuing institution may be understood as a bank institution generating data corresponding to the subsidiary wallet (i.e., the target hardware wallet) under the target wallet account corresponding to the target user according to the application information provided by the target user, and determining that there is a parent-subsidiary relationship between the subsidiary wallet and the target wallet account such that the subsidiary wallet shares the balance and payment limit corresponding to the target wallet account.

In some embodiments, the target hardware wallet sharing the balance and payment limit corresponding to the target wallet account may be understood as the target hardware wallet and the target wallet account corresponding to the same balance and payment limit, that is, when a payment function is completed through the target hardware wallet, a transaction amount is deducted from the target wallet account.

It is to be noted that, the data corresponding to the subsidiary wallet can only be officially used by being written to a hardware device, that is, the hardware device is endowed with a payment capability of the e-CNY, a payment deduction needs to be performed from the corresponding target wallet account.

In some embodiments, the server may also determine personalization data corresponding to the target hardware wallet, and send the personalization data to the terminal device or the hardware wallet platform device. It is to be noted that, the personalization data may be understood as parameters such as a single payment limit, a password-free payment limit, the maximum number of payments per day, etc.

At S2302, the target data is sent to the terminal device or the hardware wallet platform device such that the terminal device or the hardware wallet platform device opens the target hardware wallet based on the target data.

As a possible implementation, the server sends the target data to a target application program in the terminal device, or to the server corresponding to the hardware wallet platform device.

It is to be noted that, the implementation of related steps for opening the target hardware wallet by the terminal device or the hardware wallet platform device based on the target data may be referred to subsequent descriptions of some embodiments of the present disclosure.

Some embodiments of the present disclosure provide the hardware wallet opening method, which is applied to the server corresponding to the hardware wallet issuing institution. When the hardware wallet is required to be opened, the server corresponding to the hardware wallet issuing institution may generate target data of the target hardware wallet corresponding to the target wallet account of the target user based on the application information when receiving the application information that is sent by the terminal device and configured to open the target hardware wallet, and use the target hardware wallet as the subsidiary wallet of the target wallet account such that the target hardware wallet shares the balance and payment limit corresponding to the target wallet account. Further, the target data including at least one of an identifier of the target hardware wallet or association information between the target hardware wallet and the target wallet account is sent to the terminal device or a hardware wallet platform device, such that the terminal device or the hardware wallet platform device opens the target hardware wallet based on the target data. Therefore, based on the method, when the hardware wallet is opened, the opened target hardware wallet may be associated with the target user, and the opened target hardware wallet may be associated with the target wallet account corresponding to the target user; and the target hardware wallet is used as the subsidiary wallet of the target wallet account, such that the use efficiency of the hardware wallet may be improved when the target user uses the hardware wallet.

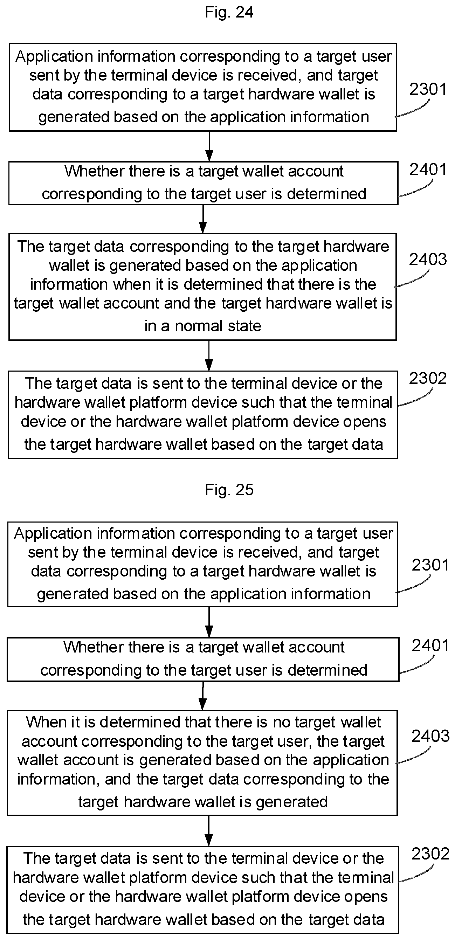

In some embodiments, since the target hardware wallet is the subsidiary wallet of the target wallet account corresponding to the target user, in order to determine that the target hardware wallet is the subsidiary wallet of the target wallet account, as shown in Fig. 24, before S2301 of "generating the target data corresponding to the target hardware wallet based on the application information" provided in some embodiments of the present disclosure, the method further includes S2401 below; and after S2401, S2301 of "generating the target data corresponding to the target hardware wallet based on the application information" provided in some embodiments of the present disclosure includes S2402 below.

At S2401, whether there is a target wallet account corresponding to the target user is determined.

As a possible implementation, after receiving the application information corresponding to the target user sent by the terminal device, the server needs to determine, in advance, whether there is the target wallet account corresponding to the target user, that is, whether the target user has registered the target wallet account.

At S2402, the target data corresponding to the target hardware wallet is generated based on the application information when it is determined that there is the target wallet account and the target hardware wallet is in a normal state.

As a possible implementation, when determining that there is the target wallet account corresponding to the target user, the server needs to further determine whether the target wallet account is in an abnormal sate; and if it is determined that the target wallet account is not in the abnormal sate, the target data corresponding to the corresponding target hardware wallet may be generated directly based on the target wallet account corresponding to the target user, and the target data is sent to the terminal device or the hardware wallet platform device.

It is to be noted that, the target wallet account being in the abnormal sate may be understood as a credit value of the target wallet account being less than a preset credit value, the target wallet account being in a frozen state, there being an illegal transaction in the target wallet account, etc.

As a possible implementation, if determining that the target wallet account is in the abnormal state, the server rejects to open a hardware wallet corresponding to the target user.

It is to be noted that, when S2401 and S2402 are included, the content included in S2301 includes "receiving the application information corresponding to the target user sent by the terminal device".

From the above, it may be learned that before the server generates the target data corresponding to the target hardware wallet based on the application information, whether there is the target wallet account corresponding to the target user also needs to be determined, so as to generate the target data corresponding to the target hardware wallet based on the application information when it is determined that there is the target wallet account and the target wallet account is in the normal state, thereby improving the efficiency of generating the hardware wallet.

In some embodiments, as shown in Fig. 25, after S2401, the hardware wallet opening method provided in some embodiments of the present disclosure may further include S2403 below.

At S2403, when it is determined that there is no target wallet account corresponding to the target user, the target wallet account is generated based on the application information, and the target data corresponding to the target hardware wallet is generated.

As a possible implementation, if determining that there is no target wallet account corresponding to the target user, the server needs to first generate the target wallet account corresponding to the target user, then generate the target data corresponding to the corresponding target hardware wallet based on the target wallet account corresponding to the target user, and send the target data to the terminal device or the hardware wallet platform device.

As a possible implementation, after the target wallet account corresponding to the target user is generated and the target data corresponding to the corresponding target hardware wallet is generated based on the target wallet account corresponding to the target user, the terminal device needs to activate the target wallet account first when receiving the target data, and then activate the target hardware wallet.

From the above, it may be learned that, when determining that there is no target wallet account corresponding to the target user, the server needs to first generate the target wallet account based on the application information, and then generate the target data corresponding to the target hardware wallet based on the application information, such that the efficiency of generating the hardware wallet may be improved.

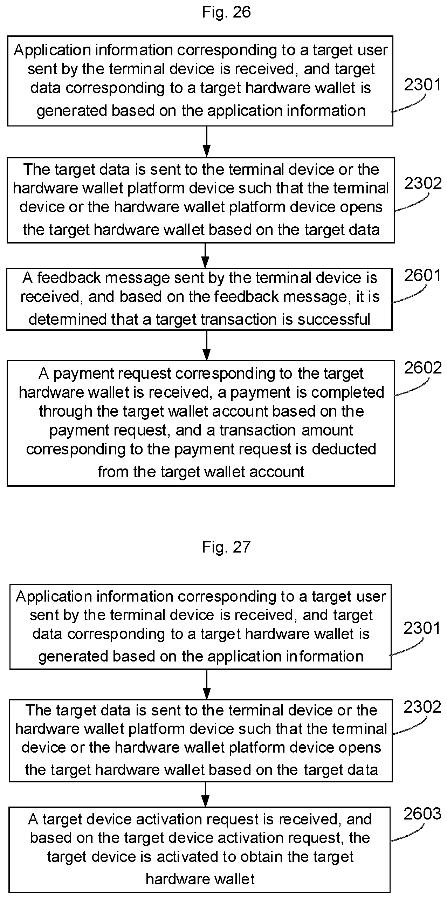

In some embodiments, as shown in Fig. 26, after S2302, the hardware wallet opening method provided in some embodiments of the present disclosure may further include S2601 to S2602 below.

At S2601, a feedback message sent by the terminal device is received, and based on the feedback message, it is determined that a target transaction is successful.

The feedback message is configured to indicate any one of the following: the target data being successfully written to the terminal device, and a target device being successfully activated.

In some embodiments, after the terminal device successfully writes the target data to the terminal device and completes the opening of the target hardware wallet based on the target data, the terminal device also needs to send the feedback message to the server, such that the server may determine, based on the feedback message, that the target transaction is successful.

In some embodiments, after the terminal device successfully activates the target device, the terminal device also needs to send the feedback message to the server, such that the server may determine, based on the feedback message, that the target transaction is successful.

At S2602, a payment request corresponding to the target hardware wallet is received, a payment is completed through the target wallet account based on the payment request, and a transaction amount corresponding to the payment request is deducted from the target wallet account.

In some embodiments, after the target transaction is successful, when a payment function is completed through the target wallet account, the target wallet account needs to send the payment request to the server, such that after receiving the payment request corresponding to the target hardware wallet, the server may complete the payment through the target wallet account corresponding to the target hardware wallet based on the payment request, and deduct the transaction amount corresponding to the payment request from the target wallet account.

From the above, it may be learned that, after the target transaction is successful, the terminal device needs to send feedback information to the server such that the server determines that the target transaction is successful; and when the target hardware wallet executes the payment function, the target hardware wallet sends the payment request to the server such that the server completes the payment through the target wallet account based on the payment request and deducts the transaction amount corresponding to the payment request from the target wallet account. Therefore, the target hardware wallet shares the balance and payment limit corresponding to the target wallet account.

In some embodiments, as shown in Fig. 27, after S2302, the hardware wallet opening method provided in some embodiments of the present disclosure may further include S2603 below.

At S2603, a target device activation request is received, and based on the target device activation request, the target device is activated to obtain the target hardware wallet.

The target data corresponding to the target hardware wallet is written to the target device.

In some embodiments, in the process of activating the target device by the terminal device through the target application program, the terminal device needs to send the target device activation request to the server, such that the server activates, based on the target device activation request, the target device to obtain the target hardware wallet.

It is to be noted that, activating the target device to obtain the target hardware wallet may be understood as a function and permission corresponding to the target device are enabled to cause the target device to have the payment function.

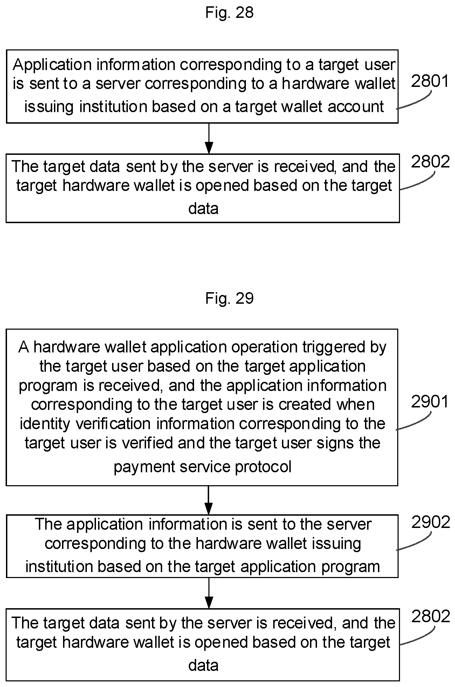

Fig. 28 is a flowchart of a hardware wallet opening method according to some embodiments. The method is described below by using an example that the method is applied to a terminal device. As shown in Fig. 28, the hardware wallet opening method includes S2801 to S2802 below.

At S2801, application information corresponding to a target user is sent to a server corresponding to a hardware wallet issuing institution based on a target wallet account.

The application information is configured to request opening of a target hardware wallet, and the application information includes at least one of the following: user information or target wallet account information.

In some embodiments, when the target user needs to open a hardware wallet, the application information may be sent to the server corresponding to the hardware wallet issuing institution based on the terminal device. Therefore, the server generates the target data corresponding to the target hardware wallet based on the application information, and sends the target data to the terminal device or the hardware wallet platform device such that the terminal device or the hardware wallet platform device opens the target hardware wallet corresponding to the target user based on the target data.

The implementation of this step may be referred to the above descriptions, and is not described herein again.

At S2802, the target data sent by the server is received, and the target hardware wallet is opened based on the target data.

The target hardware wallet is a subsidiary wallet of the target wallet account corresponding to the target user, the target hardware wallet shares a balance and payment limit corresponding to the target wallet account, and the target data includes at least one of the following: an identifier of the target hardware wallet, or corresponding association information between the target hardware wallet and the target wallet account.

In some embodiments, after the server generates the target data corresponding to the target hardware wallet based on the application information and sends the target data to the terminal device, the terminal device may open the target hardware wallet based on the received target data.

In some embodiments, after the terminal device receives the target data sent by the server, the target data may be written to the terminal device to generate the target hardware wallet based on the terminal device.

It is to be noted that, after the target data is written to the terminal device to generate the target hardware wallet based on the terminal device, the target hardware wallet based on the terminal device may be directly used, that is, the payment function may be achieved without performing an activation operation.

As a possible implementation, after the target data is written to the terminal device to generate the target hardware wallet based on the terminal device, the terminal device also needs to return a target data writing result to the server such that the server determines, according to the target data writing result, whether the target hardware wallet may realize parent-subsidiary association and be activated for use.

In some embodiments, it may be determined that the target transaction is successful when it is determined that the association between the target hardware wallet and the target wallet account is in a normal state.

Some embodiments of the present disclosure provide the hardware wallet opening method, which is applied to the terminal device. When the hardware wallet needs to be opened, the target hardware wallet may be opened based on the target data after the terminal device sends, based on the target wallet account, the application information that corresponds to the target user and is configured to request the opening of the target hardware wallet to the server corresponding to the hardware wallet issuing institution, so as to receive the target data corresponding to the target hardware wallet generated by the server. Therefore, based on the method, the application information may be sent by the terminal device to the server corresponding to the hardware wallet issuing institution, so as to receive the target data corresponding to the target hardware wallet returned by the server, such that the target hardware wallet is opened based on the target data and the terminal device, thereby improving the opening efficiency of the hardware wallet.

The implementation of this step may be referred to the following descriptions of some embodiments of the present disclosure.

In some embodiments, as shown in Fig. 29, the method in S2801 provided in some embodiments of the present disclosure includes S2901 to S2902 below.

At S2901, a hardware wallet application operation triggered by the target user based on the target application program is received, and the application information corresponding to the target user is created when identity verification information corresponding to the target user is verified and the target user signs the payment service protocol.

In some embodiments, the target user may select the target wallet account corresponding to the target user through the target application program in the terminal device, and submit the application information to the server in real time after the identity verification information (e.g., a wallet payment password and the like) of the target user is verified and the payment service protocol is signed.

In some embodiments, the target user may fill in real-name information and signs the payment service protocol through the target application program in the terminal device, so as to make opening determination after the server collects information of a plurality of users, thereby opening hardware wallets corresponding to the plurality of users in batches.

At S2902, the application information is sent to the server corresponding to the hardware wallet issuing institution based on the target application program.

In some embodiments, the terminal device may be a handheld device corresponding to the target user, a self-service device of a bank institution, or the like. An opening application is submitted to the server through the real-name information provided by the user, and the server generates the target data corresponding to the hardware wallet in real time according to the information submitted by the user.

As a possible implementation, data transmission between the terminal device and the server corresponding to the hardware wallet issuing institution is realized through the target application program, that is, the target application program is an application program related to the server corresponding to the hardware wallet issuing institution.

From the above, it may be learned that, the terminal device may receive the hardware wallet application operation triggered by the target user based on the target application program, create the application information corresponding to the target user when the identity verification information corresponding to the target user is verified and the target user signs the payment service protocol, and send the application information to the server corresponding to the hardware wallet issuing institution based on the target application program, such that the server returns the target data corresponding to the target hardware wallet based on the application information.

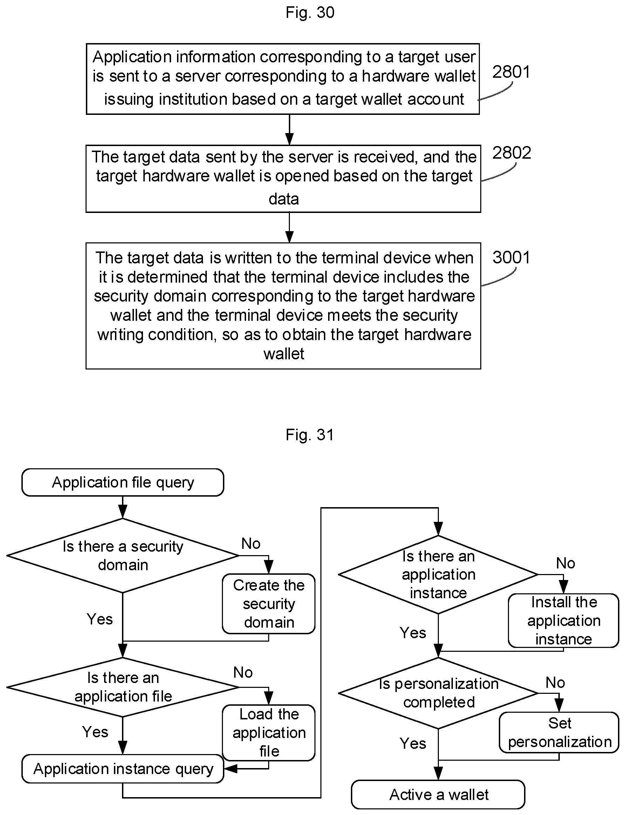

In some embodiments, whether the terminal device includes a security domain corresponding to the target hardware wallet and the terminal device meets a security writing condition also needs to be determined. As shown in Fig. 30, S2802 of "opening the target hardware wallet based on the target data" provided in some embodiments of the present disclosure includes S3001 below.

At S3001, the target data is written to the terminal device when it is determined that the terminal device includes the security domain corresponding to the target hardware wallet and the terminal device meets the security writing condition, so as to obtain the target hardware wallet.

The target hardware wallet is opened based on the terminal device.

In some embodiments, whether the terminal device includes the security domain corresponding to the target hardware wallet and the terminal device meets the security writing condition also needs to be determined.

As a possible implementation, the terminal device also needs to determine the legality of the terminal device before the target data is written to the terminal device, so as to determine whether the terminal device includes the security domain corresponding to the target hardware wallet and the terminal device meets the security writing condition; and then the target data is written to the terminal device when it is determined that the terminal device includes the security domain corresponding to the target hardware wallet and the terminal device meets the security writing condition, so as to obtain the target hardware wallet.

As a possible implementation, when it is determined that the terminal device does not include the security domain corresponding to the target hardware wallet, the security domain corresponding to the target hardware wallet needs to be created first, and then the target data is written to the terminal device, so as to obtain the target hardware wallet.

In some embodiments, Fig. 31 is a schematic flowchart for determining the legality of the terminal device. First, whether a hardware security storage chip of the terminal device has a security domain needs to be determined according to related instructions through a management platform of the terminal device; if there is no security domain, a corresponding security domain needs to be created; if there is a security domain, whether there is target data (application files) needs to be determined; and when it is determined that there is target data, the target data is written to the terminal device to obtain the target hardware wallet; or the target data is loaded and written to the terminal device. Further, whether there is an application instance also needs to be determined; if it is determined that there is no application instance, the application instance needs to be installed first; and when it is determined that there is an application instance, whether the setting of personalization data is completed is determined, and the target hardware wallet is activated after the personalization data is set.

It is to be noted that, when some embodiments of the present disclosure include S3001, the content included in S2802 includes "receiving the target data sent by the server".

From the above, it may be learned that, after the terminal device receives the target data, whether the terminal device includes the security domain corresponding to the target hardware wallet and the terminal device meets the security writing condition also needs to be determined, to write the target data to the terminal device when it is determined that the terminal device includes the security domain corresponding to the target hardware wallet and the terminal device meets the security writing condition, so as to obtain the target hardware wallet; or the security domain corresponding to the target hardware wallet is created first when it is determined that the terminal device does not include the security domain corresponding to the target hardware wallet, and then the target data is written to the terminal device to obtain the target hardware wallet, such that the reliability of opening the hardware wallet may be improved.

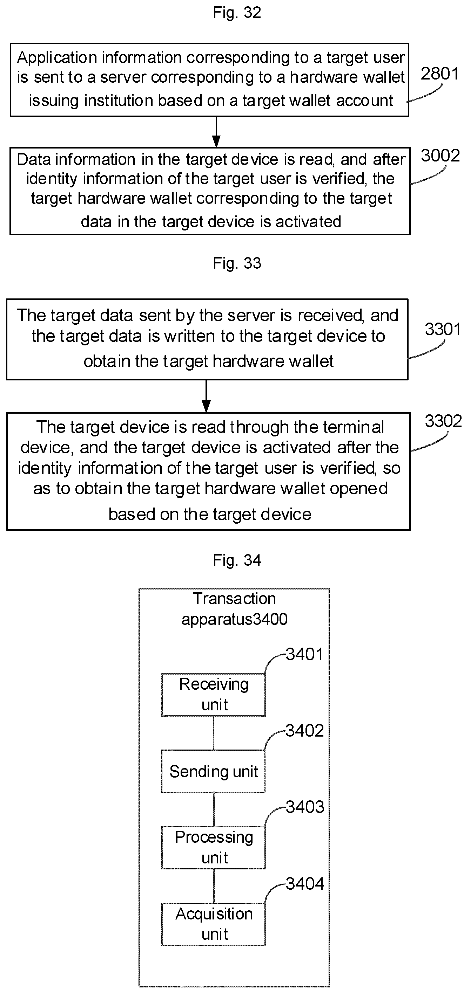

In some embodiments, as shown in Fig. 32, after S2801, the hardware wallet opening method provided in some embodiments of the present disclosure may further include S3002 below.

At S3002, data information in the target device is read, and after identity information of the target user is verified, the target hardware wallet corresponding to the target data in the target device is activated.

The data information includes the target data.

As a possible implementation, when the hardware wallet platform device writes the target data to the target device, the terminal device may also directly read the target device, and activate the target device after the identity information of the target user is verified, so as to obtain the target hardware wallet.

It is to be noted that, in this case, the terminal device does not need to receive the target data sent by the server. The target hardware wallet opened based on the target device may be obtained by reading and activating the target device.

As a possible implementation, after the terminal device reads the target device, the target data may be acquired from the target device and written to the local terminal device, so as to obtain the target hardware wallet based on the terminal device.

From the above, it may be learned that, when not receiving the target data sent by the server, the terminal device may also read the data information in the target device, and then activate the target hardware wallet corresponding to the target data in the target device after the identity information of the target user is verified, so as to obtain the target hardware wallet, such that the diversity of opening the hardware wallet is improved.

Fig. 33 is a flowchart of a hardware wallet opening method according to some embodiments. The method is described below by using an example that the method is applied to a hardware wallet platform device. As shown in Fig. 33, the hardware wallet opening method includes S3301 to S3302 below.

At S3301, the target data sent by the server is received, and the target data is written to the target device to obtain the target hardware wallet.

The target data is data corresponding to the target hardware wallet generated by the server based on application information, and the target data includes at least one of the following: an identifier of a target hardware wallet, or corresponding association information between the target hardware wallet and the target wallet account. The target hardware wallet is a subsidiary wallet of the target wallet account corresponding to a target user, and the target hardware wallet shares a balance and payment limit corresponding to the target wallet account.

In some embodiments of the present disclosure, the hardware wallets may be opened in batch in a preset manner, that is, the server generates data information of hardware wallets corresponding to a plurality of users in batch on a background in a non-real-time manner according to information submitted by the users, and sends the data information of the hardware wallets corresponding to the plurality of users to the hardware wallet platform device, such that the hardware wallet platform device writes the data information of the hardware wallets corresponding to the plurality of users to a plurality of target devices, respectively, so as to obtain target hardware wallets based on the target devices corresponding to the plurality of users. Therefore, the users may successfully open the hardware wallets after getting and activating the target devices.

In some embodiments, after getting the target device, the user may activate the target device through the target application program in the terminal device, or may also activate the target device through a bank institution counter.

In some embodiments, after receiving the target data sent by the server, the hardware wallet platform device needs to first determine the legality of the target device to determine whether the target device includes the security domain corresponding to the target hardware wallet and the target device meets the security writing condition, and then write the target data to the target device when it is determined that the target device includes the security domain corresponding to the target hardware wallet and the target device meets the security writing condition, so as to obtain the target hardware wallet based on the target device.

In some embodiments, after writing the target data to the target device to obtain the target hardware wallet based on the target device, the hardware wallet platform device also needs to return a target data writing result to the server such that the server determines, according to the target data writing result whether the target hardware wallet may realize parent-subsidiary association and be activated for use.

In some embodiments, after writing the target data to the target device to obtain the target hardware wallet based on the target device, the hardware wallet platform device may post the target device to the server (i.e., the bank institution), or directly post the target device to the target user. In a process of transporting the target device, the target hardware wallet based on the target device cannot be used, such that there is no risk of loss of funds to the target wallet account of the target user.

At S3302, the target device is read through the terminal device, and the target device is activated after the identity information of the target user is verified, so as to obtain the target hardware wallet opened based on the target device.

In some embodiments, after the target hardware wallet based on the target device is obtained, the target device needs to be read through the terminal device, and the identity information of the target user needs to be verified to activate the target device after the identity information of the target user is verified, so as to obtain the target hardware wallet opened based on the target device.

In some embodiments of the present disclosure, the target hardware wallet is the subsidiary wallet of the target wallet account corresponding to the target user, and the subsidiary wallet is in an associated parent-subsidiary relationship with the target wallet account, such that a payment of an e-CNY may be completed by touching the target hardware wallet to a receiving terminal, and deduction is performed from the associated target wallet account during the payment.

In some embodiments of the present disclosure, when the target user needs to open the hardware wallet, the target user triggers the hardware wallet application operation based on the target application program in the terminal device, creates the application information corresponding to the target user when the identity verification information corresponding to the target user is verified and the target user signs the payment service protocol, and sends the application information to the server corresponding to the hardware wallet issuing institution based on the target application program. Therefore, when the server receives the application information corresponding to the target user sent by the terminal device, whether there is a target wallet account corresponding to the target user is determined first to generate the target data corresponding to the target hardware wallet based on the application information when it is determined that there is a target wallet account and the target wallet account is in a normal state, and the target data is sent to the terminal device or the hardware wallet platform device, such that the terminal device or the hardware wallet platform device opens the target hardware wallet corresponding to the target user based on the target data; or when it is determined that there is no target wallet account corresponding to the target user, the target wallet account is generated based on the application information, then the target data corresponding to the target hardware wallet is generated based on the application information, and the target data is sent to the terminal device or the hardware wallet platform device.

In one case, when the terminal device receives the target data sent by the server, whether the terminal device includes the security domain corresponding to the target hardware wallet and the terminal device meets the security writing condition may be determined first; and when it is determined that the terminal device includes the security domain corresponding to the target hardware wallet and the terminal device meets the security writing condition, the target data is written to the terminal device to obtain the target hardware wallet. After the target hardware wallet is opened, feedback information is sent to the server, such that the server determines that the target transaction is successful based on the feedback message when receiving the feedback message sent by the terminal device. Therefore, when the target user pays through the target hardware wallet, the target hardware wallet may send the payment request to the server such that the server completes the payment through the target wallet account based on the payment request when receiving the payment request sent by the target hardware wallet, and deducts a transaction amount corresponding to the payment request from the target wallet account.

In another case, when the hardware wallet platform device receives the target data sent by the server, the target data may be written to the target device to obtain the target hardware wallet, such that the data information in the target device may be read through the terminal device, and the target device activation request is sent to the server after the identity information of the target user is verified, and when the server receives the target device activation request, the target device is activated to obtain the target hardware wallet based on the target device activation request.

The transaction method and the hardware wallet opening method are described in the above embodiments. A transaction apparatus provided in some embodiments of the present disclosure are described below with reference to Fig. 34 to Fig. 39. In order to implement the above function, the transaction apparatus includes corresponding hardware structures and/or software modules for executing various functions. Those skilled in the art should readily realize that, with reference to algorithm steps of various examples described in the embodiments disclosed in the present application, the transaction method and the hardware wallet opening method may be implemented in the form of hardware or a combination of the hardware and computer software. Whether a certain function is executed in a hardware or a computer software manner depends on specific applications and design constraints of the technical solutions. Professionals may realize the described functions for each specific application by use of different methods, but such implementation shall fall within the scope of some embodiments of the present disclosure.

In some embodiments of the present disclosure, division of functional modules may be performed on the transaction apparatus according to the above method. In the transaction apparatus, the functional modules may be divided according to corresponding functions, and two or more functions may be integrated in one processing module. The above integrated module may be implemented in a form of hardware, or may be implemented in a form of a software functional module. It is to be noted that, the module division in some embodiments of the present disclosure is exemplary, and is merely logical function division. During actual implementation, the modules may be divided in other manners.

Fig. 34 is a block diagram of a transaction apparatus according to some embodiments. Referring to Fig. 34, the transaction apparatus is applied to a hardware wallet. The hardware wallet stores association information of a target wallet account associated with the hardware wallet. The transaction apparatus includes a receiving unit 3401 and a sending unit 3402.

The receiving unit 3401 is configured to receive a transaction request from a transaction initiating device.

The sending unit 3402 is configured to, in response to the transaction request, send the association information to the transaction initiating device such that the transaction initiating device performs a transaction with the target wallet account according to the association information.

In a possible implementation, the receiving unit 3401 is further configured to receive a transaction request from a transaction initiating device. The feature negotiation request message is information for requesting negotiation of feature parameters of the hardware wallet and the transaction initiating device, and the feature parameters include one or more of the following: version information of a digital currency string expression, application version information, a transaction mode, a device type, and a networking parameter.

The sending unit 3402 is further configured to, in response to the feature negotiation request message, send the feature parameter of the hardware wallet to the transaction initiating device.

In a possible implementation, the transaction apparatus further includes a processing unit 3403. The processing unit 3403 is configured to, in response to a parameter configuration operation executed by a user, update configuration information corresponding to the parameter configuration operation. The configuration information is information for configuring a transaction parameter of the hardware wallet, and the transaction parameter includes one or more of the following: a transaction limit, a transaction password, a password verification payment limit, and a password-free payment limit.

In a possible implementation, the transaction apparatus further includes an acquisition unit 3404. The acquisition unit 3404 is configured to, in response to an account binding operation executed by the user, acquire account information corresponding to the account binding operation. The account information belongs to the target wallet account.

The sending unit 3402 is further configured to send an account binding request comprising the account information to an account platform of the target wallet account. The account binding request is a request that requests to bind an association relationship between the hardware wallet and the target wallet account.

The receiving unit 3401 is further configured to receives the association information sent by the account platform when the hardware wallet is successfully bound to the target wallet account, and store the association information.

In a possible implementation, the receiving unit 3401 is configured to receive the transaction request that is sent by the transaction initiating device through a preset communication mode. The preset communication mode includes at least one of a near-field wireless communication mode, a Bluetooth communication mode, or an UWB communication mode.

In a possible implementation, the receiving unit 3401 is further configured to receive a transaction result sent by the transaction initiating device, and display the transaction result.

In a possible implementation, the processing unit 3403 is further configured to, when the transaction result is a result that indicates a successful transaction, based on a transaction counter, update transaction counting information of a transaction corresponding to the transaction result.

In a possible implementation, the hardware wallet stores a secret key of the hardware wallet. The sending unit 3402 is configured to encrypt the association information based on the secret key, and send the encrypted association information to the transaction initiating device.

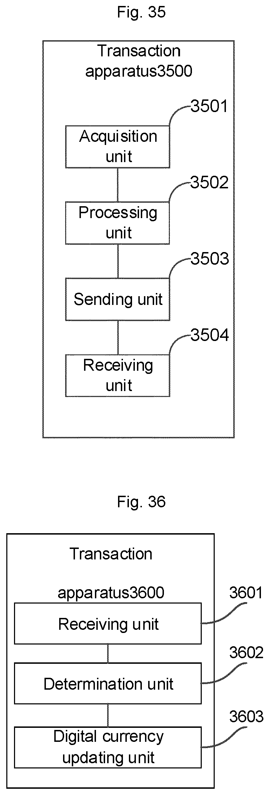

Fig. 35 is a block diagram of another transaction apparatus according to some embodiments. Referring to Fig. 35, the transaction apparatus 3500 is applied to a transaction initiating device. The transaction apparatus includes an acquisition unit 3501 and a processing unit 3502.

The acquisition unit 3501 is configured to, in a process of performing a transaction with a hardware wallet, acquire association information of the hardware wallet. The association information is association information of a target wallet account associated with the hardware wallet.

The processing unit 3502 is configured to perform a transaction with the target wallet account based on the association information.

In a possible implementation, the acquisition unit 3501 is configured to receive the association information that is sent by the hardware wallet through a preset communication mode. The preset communication mode includes at least one of a near-field wireless communication mode, a Bluetooth communication mode, or an UWB communication mode.

In a possible implementation, the transaction apparatus further includes a sending unit 3503 and a receiving unit 3504.

The sending unit 3503 is configured to send a feature negotiation request message to the hardware wallet. The feature negotiation request message is a message for requesting negotiation of feature parameters of the hardware wallet and the transaction initiating device, and the feature parameters include one or more of the following: version information of a digital currency string expression, application version information, a transaction mode, a device type, and a networking parameter.

The receiving unit 3504 is configured to receive the feature parameter of the hardware wallet sent by the hardware wallet, and determine a feature negotiation result based on the feature parameter of the hardware wallet and the feature parameter of the transaction initiating device.

The sending unit 3503 is further configured to send the feature negotiation result to the hardware wallet.

For the apparatus in the above embodiments, the manner in which each module performs operations has been described in detail in the embodiments of the method, and details are not described herein again.

In a possible implementation, the processing unit 3502 is configured to send transaction request information to an operator background system corresponding to the target wallet account such that the operator background system corresponding to the target wallet account updates digital currency in the target wallet account.

In a possible implementation, the processing unit 3502 is configured to send the transaction request information to the operator background system corresponding to the target wallet account such that the operator background system corresponding to the target wallet account updates the digital currency in the target wallet account, and an operator background system corresponding to the transaction initiating device updates digital currency in an account corresponding to the transaction initiating device.

In a possible implementation, the receiving unit 3504 is further configured to receive transaction success information sent by the operator background system corresponding to the transaction initiating device when the operator background system corresponding to the transaction initiating device successfully updates the digital currency in the account corresponding to the transaction initiating device, and display the transaction success information.

In some embodiments, some embodiments of the present disclosure further provide a transaction apparatus shown in Fig. 36. The transaction apparatus 3600 includes a receiving unit 3601, a determination unit 3602, and a digital currency updating unit 3603.

The receiving unit 3601 is configured to execute receiving of a deduction request. The deduction request is sent by a transaction initiating device in response to acquiring of a hardware wallet identifier corresponding to a hardware wallet, and the deduction request includes the hardware wallet identifier and a collection amount.

The determination unit 3602 is configured to execute determination of a parent wallet account associated with the hardware wallet identifier and a balance of the parent wallet account.

The digital currency updating unit 3603 is configured to execute, when the balance is greater than or equal to the collection amount, according to the collection amount, updating of digital currency in the target wallet account and digital currency in a collection account.

In a possible implementation, the deduction request further includes association information; and the association information is information that indicates an identifier of the parent wallet account associated with the hardware wallet.

The determination unit 3602 is configured to determine the parent wallet account associated with the hardware wallet according to the association information associated with the hardware wallet identifier.

In another possible implementation, the digital currency updating unit 3603 is further configured to execute the following: when the balance is less than the collection amount, bank account information of at least one bank account associated with the target wallet account is acquired; a target bank account is determined from the at least one bank account according to the bank account information of the at least one bank account; according to the collection amount, a deposit amount of the target bank account and the digital currency of the collection account are updated; or a difference amount between the collection amount and the balance is determined; and the digital currency of the target wallet account is updated according to the balance, the deposit amount of the target bank account is updated according to the difference amount, and the digital currency of the collection account is updated according to the collection amount.

In another possible implementation, the bank account information includes the at least one bank having different deduction priorities and digital currency updating limits. The determination unit 3602 is configured to execute the following: according to the deduction priority of each bank account, whether a deposit amount updating limit of each bank account is greater than or equal to an amount to be updated is determined one by one, until the target bank account with the digital currency updating limit greater than or equal to the amount to be updated is determined.

In another possible implementation, the bank account information includes the at least one bank having different deduction priorities and digital currency updating limits. The determination unit 3602 is configured to execute the following: according to the deduction priority of each bank account, whether a deposit amount updating limit of each bank account is greater than or equal to an amount to be updated is determined one by one, until the target bank account with the digital currency updating limit greater than or equal to the amount to be updated is determined.

In another possible implementation, the transaction apparatus is further configured to execute the following: the deduction request is rejected when the target bank account is not determined, and a first prompt instruction is sent to the transaction initiating device. The first prompt instruction is prompt information instructing the transaction initiating device to display a failed digital currency transaction.

In another possible implementation, the transaction apparatus is further configured to execute the following: account information of the hardware wallet is acquired according to the hardware wallet identifier, where the account information includes a maximum limit threshold that the digital currency is allowed to be updated; when the collection amount is less than or equal to the maximum limit threshold, the balance of the target wallet account is compared with the collection amount; and the deduction request is rejected when it is determined that the collection amount is greater than the maximum limit threshold.

In another possible implementation, the account information of the hardware wallet further includes state information, and the state information is information representing that the hardware wallet is in an available state or a non-available state. The transaction apparatus is further configured to execute the following: the collection amount is compared with the maximum limit threshold when it is determined that the hardware wallet is in the available state.

In another possible implementation, the transaction apparatus is further configured to execute the following: when the hardware wallet is in the non-available state, the deduction request is rejected, and a second prompt instruction is sent to the transaction initiating device. The second prompt instruction is prompt information instructing the transaction initiating device to display that the hardware wallet is in the non-available state.

In another possible implementation, the account information further includes a password-free limit threshold that the digital currency is allowed to be updated in a password-free manner, and the password-free limit threshold is less than the maximum limit threshold. The transaction apparatus is further configured to execute the following: a password authentication instruction is sent to the transaction initiating device when the collection amount is less than or equal to the maximum limit threshold and greater than the password-free limit threshold, where the password authentication instruction instructs the transaction initiating device to prompt a user using the hardware wallet to input password information; the password information returned by the transaction initiating device is received, and authenticated; and according to the collection amount, the digital currency of the target wallet account and the digital currency of the collection account are updated, including: when the password information is authenticated, the digital currency of the target wallet account and the digital currency of the collection account are updated according to the collection amount.

In another possible implementation, the transaction apparatus is further configured to execute the following: a digital currency returning request is received, where the digital currency returning request is sent by the transaction initiating device in response to a received refund instruction, and the digital currency returning request is a request indicating the returning of the digital currency updated by the collection account to a payment account; the digital currency of the collection account is updated according to the collection amount; and when the payment account is the target wallet account, the digital currency of the target wallet account is updated according to the collection amount, when the payment account includes the target wallet account and the target bank account, the digital currency of the target wallet account is updated according to the balance, and the deposit amount of the target bank account is updated according to the difference amount.

In some embodiments, the transaction apparatus further includes a comparison unit. The comparison unit is configured to execute the following: account information of the hardware wallet is acquired according to the hardware wallet identifier, where the account information includes a maximum limit threshold that the digital currency is allowed to be transferred; when it is determined that the collection amount is less than or equal to the maximum limit threshold, the balance of the parent wallet account is compared with the collection amount; and when it is determined that the collection amount is greater than the maximum limit threshold, the deduction request sent by the transaction initiating device is rejected.

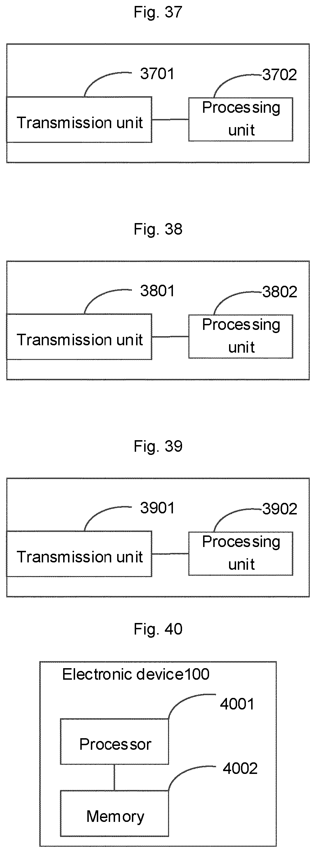

Fig. 37 shows a server corresponding to a hardware wallet issuing institution according to some embodiments. Referring to Fig. 37, the server includes a transmission unit 3701 and a processing unit 3702.

The transmission unit 3701 is configured to receive application information corresponding to a target user sent by a terminal device. The application information is information applying to open a target hardware wallet, and the application information includes at least one of the following: user information or target wallet account information.

The processing unit 3702 is configured to generate, based on the application information, target data corresponding to the target hardware wallet. The target hardware wallet is a subsidiary wallet of a target wallet account corresponding to the target user, the target hardware wallet shares a balance and payment limit corresponding to the target wallet account, and the target data comprises at least one of the following: an identifier of the target hardware wallet, or corresponding association information between the hardware wallet and the target wallet account.

The transmission unit 3701 is further configured to send the target data to the terminal device or a hardware wallet platform device such that the terminal device or the hardware wallet platform device opens the target hardware wallet based one the target data.

In some embodiments, the processing unit 3702 is configured to determine whether there is a target wallet account corresponding to the target user. The processing unit 3702 is further configured to generate, based on the application information, the target data corresponding to the target hardware wallet when it is determined that there is the target wallet account and the target hardware wallet is in a normal state.

In some embodiments, the processing unit 3702 is further configured to generate the target wallet account based on the application information when it is determined that there is no target wallet account corresponding to the target user.

In some embodiments, the transmission unit 3701 is configured to receive a feedback message sent by the terminal device. The feedback message is configured to indicate any one of the following: the target data being successfully written to the terminal device, and a target device being successfully activated.

The processing unit 3702 is configured to, based on the feedback message, determine that a target transaction is successful.

The transmission unit 3701 is configured to receive a payment request corresponding to the target hardware wallet.

The processing unit 3702 is further configured to, based on the payment request, complete a payment through the target wallet account; and deduct a transaction amount corresponding to the payment request from the target wallet account.

In some embodiments, the transmission unit 3701 is configured to receive a target device activation request.

The processing unit 3702 is configured to, based on the target device activation request, activate the target device to obtain the target hardware wallet. The target device is written with the target data corresponding to the target hardware wallet.

Fig. 38 shows a terminal device according to some embodiments. Referring to Fig. 38, the terminal device includes a transmission unit 3801 and a processing unit 3802.

The transmission unit 3801 is configured to, based on a target wallet account, send application information corresponding to a target user to a server corresponding to a hardware wallet issuing institution. The application information is information applying to open a target hardware wallet, and the application information includes at least one of the following: user information or target wallet account information.

The transmission unit 3801 is further configured to receive target data sent by the server.

The processing unit 3802 is configured to open the target hardware wallet based on the target data. The target hardware wallet is a subsidiary wallet of the target wallet account corresponding to the target user, the target hardware wallet shares a balance and payment limit corresponding to the target wallet account, and the target data includes at least one of the following: an identifier of the target hardware wallet, or corresponding association information between the target hardware wallet and the target wallet account.

In some embodiments, the transmission unit 3801 is configured to receive a hardware wallet application operation triggered by the target user based on a target application program.

The processing unit 3802 is configured to create the application information corresponding to the target user when identity verification information corresponding to the target user is verified and the target user signs a payment service protocol.

The transmission unit 3801 is configured to send the application information to the server corresponding to the hardware wallet issuing institution based on the target application program.

In some embodiments, the processing unit 3802 is configured to write the target data to the terminal device when it is determined that the terminal device comprises a security domain corresponding to the target hardware wallet and the terminal device meets a security writing condition, so as to obtain the target hardware wallet. The target hardware wallet is opened based on the terminal device.

In some embodiments, the processing unit 3802 is configured to read data information in the target device. The data information includes the target data.

The processing unit 3802 is further configured to, after identity information of the target user is verified, activate the target hardware wallet corresponding to the target data in the target device.

Fig. 39 shows a hardware wallet platform device according to some embodiments. Referring to Fig. 39, the hardware wallet platform device includes a transmission unit 3901 and a processing unit 3902

The transmission unit 3901 is configured to receive target data sent by a server. The target data is data corresponding to the target hardware wallet generated by the server based on application information, and the target data comprises at least one of the following: an identifier of a target hardware wallet, or corresponding association information between the target hardware wallet and the target wallet account.

The processing unit 3902 is configured to write the target data to a target device to obtain the target hardware wallet. The target hardware wallet is a subsidiary wallet of the target wallet account corresponding to a target user, and the target hardware wallet shares a balance and payment limit corresponding to the target wallet account.

For the apparatus in the above embodiments, the specifically manner in which each module performs operations has been described in detail in the embodiments of the method, and details are not described herein again.

Fig. 40 is a block diagram of an electronic device according to some embodiments. As shown in Fig. 40, the electronic device 100 includes a processor 4001 and a memory 4002.

The memory 4002 is configured to store an executable instruction of the processor 4001. It may be understood that, the processor 4001 is configured to execute the instruction to implement the transaction method and the hardware wallet opening method in the above embodiments.

It is to be noted that, those skilled in the art may understand that a structure of the electronic device shown in Fig. 40 does not constitute a limitation to the electronic device. The electronic device may include more or less components than that shown in Fig. 40, or combine some components, or arrange different components.

It is to be noted that, as a control center of the electronic device, the processor 4001 is connected to all parts of the entire electronic device by using various interfaces and lines, and performs various functions and data processing of the electronic device by running or executing the software program and/or module stored in the memory 4002 and invoking the data stored in the memory 4002, so as to perform overall monitoring on the electronic device. The processor 4001 may include one or more processing units. In some embodiments, the processor 4001 may integrate an application processor and a modem processor. The application processor mainly processes the operating system, a user interface, and the application. The modem processor mainly processes wireless communication. It is to be understood that, the above modem processor may not be integrated into the processor 4001.

The memory 4002 may be configured to store a software program and various data. The memory 4002 may mainly include a program storage area and a data storage area. The program storage area may store an operating system and an application program (e.g., a receiving module, an acquisition module, a payment module, etc.) required for at least one functional module. In addition, the memory 4002 may include a high-speed random access memory, and may further include a non-volatile memory, such as at least one magnetic disk memory device, a flash memory device, or other volatile solid-state memory devices.

In some embodiments, a computer-readable storage medium (e.g., a non-transient computer readable storage medium) including an instruction is further provided, such as the memory 4002 including the instruction. The foregoing instruction may be executed by the processor 4001 of the electronic device 100 to implement the transaction method and the hardware wallet opening method in the above embodiments.

For example, without limitation, the computer-readable storage medium may include a Hard Disk Drive (HDD), a floppy disk drive, a flash memory, an optical disk, a magnetic disc, a magnetic tape or Universal Serial Bus (USB) drive, or a combination of two or more of the above. In some examples, the computer-readable storage medium may include a removable or non-removable (or fixed) medium, or the computer-readable storage medium is a non-volatile solid-state memory. The computer-readable storage medium may be inside or outside a transaction device.

During an actual implementation, processing functions of various units in the virtual apparatus may all be implemented by calling a computer program stored in the memory 4002 by the processor 4001 in Fig. 40. An execution process may be referred to descriptions of the portions of the transaction method and the hardware wallet opening method in the above embodiments, and is not described herein again.

In some embodiments, the computer-readable storage medium may be a non-transitory computer-readable storage medium. For example, the non-transitory computer-readable storage medium may be a Read-Only Memory (ROM), a Random Access Memory (RAM), a CD-ROM, a magnetic tape, a floppy disk, an optical data storage device, or the like.

In an exemplary embodiment, the embodiments of the present disclosure further provide a computer program product including one or more instructions. The one or more instructions may be executed by the processor 4001 of the electronic device 100 to complete the transaction method and the hardware wallet opening method in the above embodiments.

It is to be noted that, when the instruction in the computer-readable storage medium or the one or more instructions in the computer program product are executed by the processor 4001 of the electronic device 100, various processes in the transaction method and hardware wallet opening method embodiments are implemented, and can achieve the same technical effect as the transaction method and hardware wallet opening method. In order to avoid repetition, details are not described herein again.

By means of the description of the above implementations, it is clear to those skilled in the field that, for ease and briefness of description, only the above division of each functional module is given as an example. In practical applications, the above functions can be assigned to different functional modules as needed. That is to say the internal structure of the apparatus is divided into different functional modules to complete all or part of the above functions.

In some embodiments of the present disclosure, it is to be understood that the disclosed apparatus and method may be implemented in other ways. For example, the device embodiment described above is only schematic, and for example, division of the modules or units is only logic function division, and other division manners may be adopted during practical implementation. For another example, a plurality of units or components may be combined or integrated into another apparatus, or some characteristics may be neglected or not executed. Furthermore, the displayed or discussed mutual coupling or direct coupling or communication connection may be indirect coupling or communication connection through some interfaces, devices or units, and may be in electrical, mechanical or other forms.

The units described as separate components may or may not be physically separated. The components displayed as units may be a physical unit or a plurality of physical units. That is to say, the components may be located in one place, or may be distributed on a plurality of places. Part or all of the units may be selected according to actual requirements to achieve the payment method of the solutions of this embodiment.

In addition, the functional units in the various embodiments of the present disclosure may be integrated into one processing unit, or each unit may exist alone physically, or two or more than two units may be integrated into one unit. The above integrated unit can be implemented in the form of hardware, or can be implemented in the form of a software functional unit.

If the integrated unit is implemented in the form of the software functional unit and sold or used as an independent product, it can be stored in the readable storage medium. Based on this understanding, the technical solutions of the embodiments of the present disclosure essentially or the parts that contribute to the related art, or all or part of the technical solutions can be embodied in the form of a software product. The software product is stored in a storage medium, including a plurality of instructions for causing a device (which may be a one-chip computer, a chip, and the like) to execute all or part of the steps of the method described in the embodiments of the present disclosure. The foregoing storage medium includes: a USB flash disk, a mobile Hard Disk Drive (HDD), a Read-Only Memory (ROM), a Random Access Memory (RAM) and various media that can store program codes, such as a magnetic disk, or an optical disk.

The above are only specific implementations of the embodiments of the present disclosure, but the scope of protection of the embodiments of the present disclosure is not limited thereto, and any changes or substitutions within the scope of the technology disclosed by the embodiments of the present disclosure shall be covered within the scope of protection of the present disclosure. Therefore, the scope of protection of the present disclosure shall be subject to the scope of protection of the claims.

## Claims

1. A transaction method, applied to a hardware wallet, wherein the hardware wallet stores association information of a target wallet account associated with the hardware wallet, and the method comprises:
receiving a transaction request from a transaction initiating device; and
in response to the transaction request, sending the association information to the transaction initiating device such that the transaction initiating device performs a transaction with the target wallet account according to the association information.

2. The transaction method as claimed in claim 1, wherein before receiving the transaction request from the transaction initiating device, the method further comprises:
receiving a feature negotiation request message from the transaction initiating device, wherein the feature negotiation request message is information for requesting to negotiate a feature parameter of the hardware wallet with the transaction initiating device, and the feature parameter comprise one or more of the following: version information of a digital currency string expression, application version information, a transaction mode, a device type, and a networking parameter; and
in response to the feature negotiation request message, sending the feature parameter of the hardware wallet to the transaction initiating device.

3. The transaction method as claimed in claim 1 or 2, further comprising:
in response to a parameter configuration operation executed by a user, updating configuration information corresponding to the parameter configuration operation, wherein the configuration information is information for configuring a transaction parameter of the hardware wallet, and the transaction parameter comprises one or more of the following: a transaction limit, a transaction password, a password verification payment limit, and a password-free payment limit.

4. The transaction method as claimed in any one of claims 1 to 3, further comprising:
in response to an account binding operation executed by a user, acquiring account information corresponding to the account binding operation, wherein the account information belongs to the target wallet account;
sending an account binding request comprising the account information to an account platform of the target wallet account, wherein the account binding request is a request that requests to bind an association relationship between the hardware wallet and the target wallet account;
receiving the association information sent by the account platform when the hardware wallet is successfully bound to the target wallet account; and
storing the association information.

5. The transaction method as claimed in any one of claims 1 to 4, wherein receiving the transaction request from the transaction initiating device comprises:
receiving the transaction request that is sent by the transaction initiating device through a preset communication mode, wherein the preset communication mode comprises at least one of a near-field wireless communication mode, a Bluetooth communication mode, or an Ultra Wide Band (UWB) communication mode.

6. The transaction method as claimed in any one of claims 1 to 5, further comprising:
receiving a transaction result sent by the transaction initiating device; and
displaying the transaction result.

7. The transaction method as claimed in claim 6, wherein after receiving the transaction result sent by the transaction initiating device, the method further comprises:
when the transaction result is a result that indicates a successful transaction, based on a transaction counter, updating transaction counting information of a transaction corresponding to the transaction result.

8. The transaction method as claimed in any one of claims 1 to 7, wherein the hardware wallet stores a secret key of the hardware wallet; and sending the association information to the transaction initiating device comprises:
encrypting the association information based on the secret key; and
sending the encrypted association information to the transaction initiating device.

9. A transaction method, applied to a transaction initiating device and comprising:
in a process of performing a transaction with a hardware wallet, acquiring association information of the hardware wallet, wherein the association information is association information of a target wallet account associated with the hardware wallet; and
performing a transaction with the target wallet account based on the association information.

10. The transaction method as claimed in claim 9, wherein acquiring the association information of the hardware wallet comprises:
receiving the association information that is sent by the hardware wallet through a preset communication mode, wherein the preset communication mode comprises at least one of a near-field wireless communication mode, a Bluetooth communication mode, or an UWB communication mode.

11. The transaction method as claimed in claim 9 or 10, wherein before acquiring the association information of the hardware wallet, further comprising:
sending a feature negotiation request message to the hardware wallet, wherein the feature negotiation request message is information for requesting to negotiate a feature parameter of the hardware wallet with the transaction initiating device, and the feature parameter comprise one or more of the following: version information of a digital currency string expression, application version information, a transaction mode, a device type, and a networking parameter;
receiving the feature parameter of the hardware wallet sent by the hardware wallet;
determining a feature negotiation result based on the feature parameter of the hardware wallet and a feature parameter of the transaction initiating device; and
sending the feature negotiation result to the hardware wallet.

12. The transaction method as claimed in any one of claims 9 to 11, wherein performing the transaction with the target wallet account based on the association information comprises:
sending transaction request information to an operator background system corresponding to the target wallet account such that the operator background system corresponding to the target wallet account updates a digital currency in the target wallet account.

13. The transaction method as claimed in any one of claims 9 to 12, wherein performing the transaction with the target wallet account based on the association information comprises:
sending transaction request information to an operator background system corresponding to the target wallet account such that the operator background system corresponding to the target wallet account updates a digital currency in the target wallet account; and
such that an operator background system corresponding to the transaction initiating device updates a digital currency in an account corresponding to the transaction initiating device.

14. The transaction method as claimed in claim 13, further comprising:
receiving transaction success information sent by the operator background system corresponding to the transaction initiating device when the operator background system corresponding to the transaction initiating device successfully updates the digital currency in the account corresponding to the transaction initiating device; and
displaying the transaction success information.

15. A transaction method, applied to a server and comprising:
receiving a deduction request, wherein the deduction request is sent by a transaction initiating device in response to acquiring of a hardware wallet identifier corresponding to a hardware wallet, and the deduction request comprises the hardware wallet identifier and a collection amount;
determining a target wallet account associated with the hardware wallet identifier and a balance of the target wallet account; and
when the balance is greater than or equal to the collection amount, updating a digital currency in the target wallet account and a digital currency in a collection account according to the collection amount.

16. The transaction method as claimed in claim 15, wherein the deduction request further comprises association information; the association information is an identifier indicating the target wallet account associated with the hardware wallet; and
determining the target wallet account associated with the hardware wallet identifier comprises:
determining a wallet account corresponding to the association information as the target wallet account associated with the hardware wallet identifier.

17. The transaction method as claimed in claim 15 or 16, further comprising:
when the balance is less than the collection amount, acquiring bank account information of at least one bank account associated with the target wallet account;
determining a target bank account from the at least one bank account according to the bank account information of the at least one bank account;
updating a deposit amount of the target bank account and the digital currency in the collection account according to the collection amount; or determining a difference amount between the collection amount and the balance; updating the digital currency in the target wallet account according to the balance, updating the deposit amount of the target bank account according to the difference amount, and updating the digital currency in the collection account according to the collection amount.

18. The transaction method as claimed in claim 17, wherein the bank account information comprises different deduction priorities and digital currency updating limits of the at least one bank account; and determining the target bank account from the at least one bank account according to the bank account information of the at least one bank account comprises:
according to the deduction priority of each bank account, determining, one by one, whether a deposit amount updating limit of each bank account is greater than or equal to an amount to be updated, until the target bank account with the digital currency updating limit greater than or equal to the amount to be updated is determined.

19. The transaction method as claimed in claim 18, further comprising:
rejecting the deduction request when the target bank account is not determined; and
sending a first prompt instruction to the transaction initiating device, wherein the first prompt instruction is prompt information instructing the transaction initiating device to display a failed digital currency transaction.

20. The transaction method as claimed in any one of claims 15 to 19, further comprising:
acquiring account information of the hardware wallet according to the hardware wallet identifier, wherein the account information comprises a maximum limit threshold that the digital currency is allowed to be updated;
when the collection amount is less than or equal to the maximum limit threshold, comparing the balance of the target wallet account with the collection amount; and
rejecting the deduction request when it is determined that the collection amount is greater than the maximum limit threshold.

21. The transaction method as claimed in claim 20, wherein the account information of the hardware wallet further comprises state information, and the state information is information representing that the hardware wallet is in an available state or a non-available state; and the method further comprises:
comparing the collection amount with the maximum limit threshold when it is determined that the hardware wallet is in the available state.

22. The transaction method as claimed in claim 21, further comprising:
when the hardware wallet is in the non-available state, rejecting the deduction request, and sending a second prompt instruction to the transaction initiating device, wherein the second prompt instruction is prompt information instructing the transaction initiating device to display that the hardware wallet is in the non-available state.

23. The transaction method as claimed in any one of claims 20 to 22, wherein the account information further comprises a password-free limit threshold that the digital currency is allowed to be updated in a password-free manner, and the password-free limit threshold is less than the maximum limit threshold; the method further comprises:
sending a password authentication instruction to the transaction initiating device when the collection amount is less than or equal to the maximum limit threshold and greater than the password-free limit threshold, wherein the password authentication instruction instructs the transaction initiating device to prompt a user using the hardware wallet to input password information;
receiving the password information returned by the transaction initiating device; and
authenticating the password information; and
updating the digital currency in the target wallet account and the digital currency in the collection account according to the collection amount comprises:
when the password information is authenticated, updating the digital currency in the target wallet account and the digital currency in the collection account according to the collection amount.

24. The transaction method as claimed in any one of claims 15 to 23, further comprising:
receiving a digital currency returning request, wherein the digital currency returning request is sent by the transaction initiating device in response to a received refund instruction, and the digital currency returning request is a request indicating the returning of the digital currency updated by the collection account to a payment account;
updating the digital currency of the collection account according to the collection amount, and
when the payment account is the target wallet account, updating the digital currency of the target wallet account according to the collection amount;
when the payment account is the target bank account, updating a deposit amount of the target bank account according to the collection amount; and
when the payment account comprises the target wallet account and the target bank account, updating the digital currency of the target wallet account according to the balance, and updating the deposit amount of the target bank account according to a difference amount.

25. A hardware wallet opening method, applied to a server corresponding to a hardware wallet issuing institution, and comprising:
receiving application information corresponding to a target user sent by a terminal device, wherein the application information is information that requests opening of a target hardware wallet, and the application information comprises at least one of the following: user information and target wallet account information;
generating, based on the application information, target data corresponding to the target hardware wallet, wherein the target hardware wallet is a subsidiary wallet of a target wallet account corresponding to the target user, the target hardware wallet shares a balance and a payment limit corresponding to the target wallet account with the target wallet account, and the target data comprises at least one of the following: an identifier of the target hardware wallet, and corresponding association information between the target hardware wallet and the target wallet account; and
sending the target data to the terminal device or a hardware wallet platform device such that the terminal device or the hardware wallet platform device opens the target hardware wallet based on the target data.

26. The hardware wallet opening method as claimed in claim 25, wherein before generating, based on the application information, the target data corresponding to the target hardware wallet, the method further comprises:
determining whether there is a target wallet account corresponding to the target user; and
generating, based on the application information, the target data corresponding to the target hardware wallet comprises:
generating, based on the application information, the target data corresponding to the target hardware wallet when it is determined that there is the target wallet account and the target hardware wallet is in a normal state.

27. The hardware wallet opening method as claimed in claim 26, further comprising:
generating the target wallet account based on the application information when it is determined that there is no target wallet account corresponding to the target user.

28. The hardware wallet opening method as claimed in any one of claims 25 to 27, further comprising:
receiving a feedback message sent by the terminal device, wherein the feedback message is a message indicating any one of the following: the target data being successfully written to the terminal device, and a target device being successfully activated;
based on the feedback message, determining that a target transaction is successful;
receiving a payment request corresponding to the target hardware wallet;
based on the payment request, completing a payment through the target wallet account; and
deducting a transaction amount corresponding to the payment request from the target wallet account.

29. The hardware wallet opening method as claimed in claim 25, further comprising:
receiving a target device activation request; and
based on the target device activation request, activating a target device to obtain the target hardware wallet, wherein the target device is written with the target data corresponding to the target hardware wallet.

30. A hardware wallet opening method, applied to a terminal device and comprising:
based on a target wallet account, sending application information corresponding to a target user to a server corresponding to a hardware wallet issuing institution, wherein the application information is information that requests opening of a target hardware wallet, and the application information comprises at least one of the following: user information and target wallet account information;
receiving target data sent by the server; and
opening the target hardware wallet based on the target data, wherein the target hardware wallet is a subsidiary wallet of the target wallet account corresponding to the target user, the target hardware wallet shares a balance and a payment limit corresponding to the target wallet account with the target wallet account, and the target data comprises at least one of the following: an identifier of the target hardware wallet, and corresponding association information between the target hardware wallet and the target wallet account.

31. The hardware wallet opening method as claimed in claim 30, wherein based on the target wallet account, sending the application information corresponding to the target user to the server corresponding to the hardware wallet issuing institution comprises:
receiving a hardware wallet application operation triggered by the target user based on a target application program, and creating the application information corresponding to the target user when identity verification information corresponding to the target user is verified and the target user signs a payment service protocol; and
sending the application information to the server corresponding to the hardware wallet issuing institution based on the target application program.

32. The hardware wallet opening method as claimed in claim 30 or 31, wherein opening the target hardware wallet based on the target data comprises:
when it is determined that the terminal device comprises a security domain corresponding to the target hardware wallet and the terminal device meets a security writing condition, writing the target data to the terminal device so as to obtain the target hardware wallet, wherein the target hardware wallet is opened based on the terminal device.

33. The hardware wallet opening method as claimed in any one of claims 30 to 32, further comprising:
reading data information in a target device, wherein the data information comprises the target data; and
after identity information of the target user is verified, activating the target hardware wallet corresponding to the target data in the target device.

34. A hardware wallet opening method, applied to a hardware wallet platform device and comprising:
receiving target data sent by a server, wherein the target data is data corresponding to a target hardware wallet generated by the server based on application information, and the target data comprises at least one of the following: an identifier of the target hardware wallet, and corresponding association information between the target hardware wallet and a target wallet account; and
writing the target data to a target device to obtain the target hardware wallet, wherein the target hardware wallet is a subsidiary wallet of the target wallet account corresponding to a target user, and the target hardware wallet shares a balance and a payment limit corresponding to the target wallet account with the target wallet account.

35. A transaction apparatus, applied to a hardware wallet, wherein the hardware wallet stores association information of a target wallet account associated with the hardware wallet; the apparatus comprises a receiving unit and a sending unit;
the receiving unit is configured to receive a transaction request from a transaction initiating device; and
the sending unit is configured to, in response to the transaction request, send the association information to the transaction initiating device such that the transaction initiating device performs a transaction with the target wallet account according to the association information.

36. A transaction apparatus, applied to a transaction initiating device and comprising: an acquisition unit and a processing unit, wherein
the acquisition unit is configured to, in a process of performing a transaction with a hardware wallet, acquire association information of the hardware wallet, wherein the association information is association information of a target wallet account associated with the hardware wallet; and
the processing unit is configured to perform a transaction with the target wallet account based on the association information.

37. A transaction apparatus, comprising:
a receiving unit, configured to execute receiving of a deduction request, wherein the deduction request is sent by a transaction initiating device in response to acquiring of a hardware wallet identifier corresponding to a hardware wallet, and the deduction request comprises the hardware wallet identifier and a collection amount;
a determination unit, configured to execute determination of a target wallet account associated with the hardware wallet identifier and a balance of the target wallet account; and
a digital currency updating unit, configured to execute, when the balance is greater than or equal to the collection amount, updating of a digital currency in the target wallet account and a digital currency in a collection account according to the collection amount.

38. A server corresponding to a hardware wallet issuing institution, comprising a transmission unit and a processing unit, wherein
the transmission unit is configured to receive application information corresponding to a target user sent by a terminal device, wherein the application information is information that requests opening of a target hardware wallet, and the application information comprises at least one of the following: user information and target wallet account information;
the processing unit is configured to generate, based on the application information, target data corresponding to the target hardware wallet, wherein the target hardware wallet is a subsidiary wallet of a target wallet account corresponding to the target user, the target hardware wallet shares a balance and a payment limit corresponding to the target wallet account with the target wallet account, and the target data comprises at least one of the following: an identifier of the target hardware wallet, and corresponding association information between the hardware wallet and the target wallet account; and
the transmission unit is configured to send the target data to the terminal device or a hardware wallet platform device such that the terminal device or the hardware wallet platform device opens the target hardware wallet based on the target data.

39. A terminal device, comprising a transmission unit and a processing unit, wherein
the transmission unit is configured to, based on a target wallet account, send application information corresponding to a target user to a server corresponding to a hardware wallet issuing institution, wherein the application information is information that requests opening of a target hardware wallet, and the application information comprises at least one of the following:
user information and target wallet account information;
the transmission unit is configured to receive target data sent by the server; and
the processing unit is configured to open the target hardware wallet based on the target data, wherein the target hardware wallet is a subsidiary wallet of the target wallet account corresponding to the target user, the target hardware wallet shares a balance and a payment limit corresponding to the target wallet account with the target wallet account, and the target data comprises at least one of the following: an identifier of the target hardware wallet, and corresponding association information between the target hardware wallet and the target wallet account.

40. A hardware wallet platform device, comprising a transmission unit and a processing unit, wherein
the transmission unit is configured to receive target data sent by a server, wherein the target data is data corresponding to a target hardware wallet generated by the server based on application information, and the target data comprises at least one of the following: an identifier of the target hardware wallet, and corresponding association information between the target hardware wallet and the target wallet account; and
the processing unit is configured to write the target data to a target device to obtain the target hardware wallet, wherein the target hardware wallet is a subsidiary wallet of the target wallet account corresponding to a target user, and the target hardware wallet shares a balance and a payment limit corresponding to the target wallet account with the target wallet account.

41. A transaction system, comprising a hardware wallet and a transaction initiating device, wherein
the hardware wallet is configured to execute the transaction method as claimed in any one of claims 1 to 8; and
the transaction initiating device is configured to execute the transaction method as claimed in any one of claims 9 to 14.

42. A hardware wallet opening system, comprising a server corresponding to a hardware wallet issuing institution, a terminal device, and a hardware wallet platform device, wherein
the server corresponding to the hardware wallet issuing institution is configured to execute the hardware wallet opening method as claimed in any one of claims 25 to 29;
the hardware wallet platform device is configured to execute the hardware wallet opening method as claimed in any one of claims 30 to 33; and
the terminal device is configured to execute the hardware wallet opening method as claimed in claim 34.

43. An electronic device, comprising:
a processor; and
a memory configured to store an instruction that is executable by the processor, wherein
the processor is configured to execute the instruction to implement the method as claimed in any one of claims 1 to 8, any one of claims 9 to 14, any one of claims 15 to 24, any one of claims 25 to 29, any one of claims 30 to 33, or claim 34.

44. A computer-readable storage medium, storing a computer execution instruction, wherein, when the computer execution instruction is executed by a processor of an electronic device, the electronic device is enabled to execute the method as claimed in any one of claims 1 to 8, any one of claims 9 to 14, any one of claims 15 to 24, any one of claims 25 to 29, any one of claims 30 to 33, or claim 34.
